(19) Europäisches Patentamt
European Patent Office
Office européen des brevets

(11) **EP 4 403 315 B1**

(12) **EUROPÄISCHE PATENTSCHRIFT**

(45) Veröffentlichungstag und Bekanntmachung des Hinweises auf die Patenterteilung:
**27.08.2025 Patentblatt 2025/35**

(21) Anmeldenummer: **22214016.2**

(22) Anmeldetag: **15.12.2022**

(51) Internationale Patentklassifikation (IPC):
**B25J 9/16** (2006.01)

(52) Gemeinsame Patentklassifikation (CPC):
**B25J 9/163;** G05B 2219/33044; G05B 2219/33045

(54) **AUTONOMES ANSTEUERN EINER VORRICHTUNG**

AUTONOMOUS DRIVING OF A DEVICE

COMMANDE AUTONOME D'UN DISPOSITIF

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**24.07.2024 Patentblatt 2024/30**

(73) Patentinhaber: **Schreiber, Carl Albert**
**1090 Wien (AT)**

(72) Erfinder: **Schreiber, Carl Albert**
**1090 Wien (AT)**

(74) Vertreter: **Reich, Jochen**
**Reich-ip**
**Herrnstraße 15**
**80539 München (DE)**

(56) Entgegenhaltungen:
**WO-A1-2020/159947 DE-A1- 102020 212 658**

• TAKAHASHI KUNIYUKI ET AL: "Dynamic motion learning for multi-DOF flexible-joint robots using active-passive motor babbling through deep learning", vol. 31, no. 18, 17 September 2017 (2017-09-17), NL, pages 1002 - 1015, XP055840673, ISSN: 0169-1864, Retrieved from the Internet <URL:https://www.tandfonline.com/doi/pdf/10.1080/01691864.2017.1383939?needAccess=true> DOI: 10.1080/01691864.2017.1383939

• TAREK NAJJAR ET AL: "Self-Organizing Incremental Neural Network (SOINN) as a Mechanism for Motor Babbling and Sensory-Motor Learning in Developmental Robotics", 12 June 2013, ADVANCES IN COMPUTATIONAL INTELLIGENCE, SPRINGER BERLIN HEIDELBERG, BERLIN, HEIDELBERG, PAGE(S) 321 - 330, ISBN: 978-3-642-38678-7, XP047032474

• LUO DINGSHENG ET AL: "Forming the Concept of Direction Developmentally", IEEE TRANSACTIONS ON COGNITIVE AND DEVELOPMENTAL SYSTEMS, IEEE, vol. 12, no. 4, 26 November 2019 (2019-11-26), pages 759 - 773, XP011824189, ISSN: 2379-8920, [retrieved on 20201208], DOI: 10.1109/TCDS.2019.2955816

• INSIDER TECH: "Google's DeepMind AI Just Taught Itself To Walk", 12 July 2017 (2017-07-12), XP093219071, Retrieved from the Internet <URL:https://www.youtube.com/watch?v=gn4nRCC9TwQ> [retrieved on 20241108]

• ANONYMOUS: "Google's DeepMind AI Just Taught Itself To Walk", 12 July 2017 (2017-07-12), YouTube, pages 1 - 5, XP093219122, Retrieved from the Internet <URL:https://www.youtube.com/watch?v=gn4nRCC9TwQ> [retrieved on 20241108]

• INSIDER TECH: "Elon Musk's AI Company Created Virtual Robots That Sumo Wrestle", 19 October 2017 (2017-10-19), XP093219097, Retrieved from the Internet <URL:https://www.youtube.com/watch?v=2cjkKnAxCug> [retrieved on 20241108]

• ANONYMOUS: "Elon Musk's AI Company Created Virtual Robots That Sumo Wrestle", 19 October 2017 (2017-10-19), YouTube, pages 1 - 5, XP093219126, Retrieved from the Internet <URL:https://www.youtube.com/watch?v=2cjkKnAxCug> [retrieved on 20241108]

**Beschreibung**

Die vorliegende Erfindung ist auf ein Verfahren gerichtet zum autonomen Ansteuern einer Vorrichtung, wobei sich die Vorrichtung generell in einer physischen realen Welt bewegt und bezüglich ihrer physischen Ausgestaltung nicht weiter spezifiziert werden muss. Das Verfahren schafft den Vorteil, dass die Vorrichtung ein autonomes Lernen durchführt und das erlernte Wissen bzw. Verhalten kontinuierlich verbessert. Generell wird der Nachteil im Stand der Technik überwunden, dass erst Trainingsdaten geschaffen werden müssen, wie dies bei gängigen Methoden der künstlichen Intelligenz der Fall ist. Generell ist das Verfahren universell einsetzbar und die Vorrichtung lernt selbsttätig und korrigiert hierbei stets die eigene Wissensbasis. Darüber hinaus wird eine Vorrichtung vorgeschlagen, die zum Ausführen des Verfahrens eingerichtet ist, sowie eine Systemanordnung aufweisend mehrere der vorgeschlagenen Vorrichtungen. Darüber hinaus wird ein Computerprogrammprodukt und ein computerlesbares Speichermedium vorgeschlagen, welche die Verfahrensschritte ausführen bzw. einen Computer veranlassen das Verfahren auszuführen.

TAKAHASHI KUNIYUKI ET AL: "Dynamic motion learning for multi-DOF flexible-joint robots using active-passive motor babbling through deep learning", ADVANCED ROBOTICS, Bd. 31, Nr. 18 17. September 2017, Seiten 1002-1015, XP055840673 zeigt eine Lernstrategie für Roboter mit flexiblen Gelenken mit mehreren Freiheitsgraden, um dynamische Bewegungsaufgaben zu erfüllen. Obwohl Roboter mit flexiblen Gelenken mehrere potenzielle Vorteile bieten, wie z. B. die Ausnutzung der intrinsischen Dynamik und die passive Anpassung an Umgebungsänderungen mit mechanischer Nachgiebigkeit, ist die Steuerung solcher Roboter aufgrund der zunehmenden Komplexität ihrer Dynamik eine Herausforderung.

Aus dem Stand der Technik sind unterschiedliche Verfahren aus der künstlichen Intelligenz KI, im Englischen auch als Artificial Intelligence AI bezeichnet, bekannt, welche es vorsehen, dass Trainingsdaten ausgewählt und bereitgestellt werden und Algorithmen in einer Lernphase überwacht Gesetzmäßigkeiten erkennen. Hierbei ist es möglich, dass durch die Vorgaben von Ausgangsdaten und Zielwerten und durch spezielle Algorithmen Gesetzmäßigkeiten erkannt und diese sodann genutzt werden. Somit wird also innerhalb großer Datenmengen implizites Wissen nutzbar gemacht. Ist die Trainingsphase abgeschlossen, so werden die entsprechend trainierten Algorithmen auf tatsächliche Daten angewendet und generieren hieraus wiederum implizite Abhängigkeiten zur Lösung realweltlicher Probleme. Ein Nachteil ist es hierbei, dass die Trainingsdaten erst ausgewählt und vorgegeben werden müssen, welches die entstehende künstliche Intelligenz auf die Trainingsdaten beschränkt, und bereits hier unerwünschter Einfluss auf die Lernphase genommen werden kann, was zudem nicht nur fehleranfällig, sondern auch aufwendig ist.

Ferner ist aus dem Stand der Technik eine Schwarmintelligenz bekannt, wobei mehrere Vorrichtungen bereitgestellt werden und diese lösen sodann kollaborativ in verteilter Weise ein Problem. Auch hier ist die Ansteuerung und Koordination der einzelnen Teilnehmer aufwendig und teilweise fehleranfällig. Dies trifft insbesondere dann zu, wenn ein verteiltes Lernen stattfinden soll, welches wiederum koordiniert werden muss.

Weiter aus dem Stand der Technik sind künstliche neuronale Netze bekannt, welche in Anlehnung an die Graphentheorie Neuronen und Verbindungen, also Knoten und Kanten, bereitstellen. Hierzu ist es bekannt, dass diese Netzwerke Funktionen des menschlichen Gehirns nachahmen und hierbei auch lernen können. So können Kantengewichtungen variiert werden und es können neue Kanten hinzugefügt bzw. alte gelöscht werden sowie bestehende Knoten können deaktiviert werden oder aber auch neue Knoten hinzugefügt werden. In dieser Weise ergibt sich ein dynamisch lernendes Gesamtsystem.

Die Verwendung von einem KNN in der oben präsentierten Weise hat allerdings mindestens vier Probleme:

1. Bei Objekten, auf die das KNN nicht trainiert wurde, liefert das KNN keine Information, um die dem Objekt zugeordneten Routinen aufzurufen.
2. Die einprogrammierten Eigenschaften oder Verhaltensweisen der erkannten und identifizierten Objekte können entweder falsch sein, sich zwischenzeitlich geändert haben oder noch unbekannt sein.
3. Ein oder mehrere Wissenschaftler, Fachleute etc. wählen die Trainingsdaten aus und geben die zu erzielenden Ergebnisse vor. Auch beim unüberwachten Lernen werden die Trainingsdaten und Hyperparameter immer noch vom Menschen vorgegeben und das kann Fehler nicht ausschließen.
4. Ein KNN kann Fehler nicht korrigieren. Jede Einzelinformation ist über alle Parameter des KNN verteilt, ähnlich einem Hologramm, in dem jeder Datenpunkt Informationen über das gesamte Bild enthält. Ein KNN muss also immer ganz gelöscht und komplett neu trainiert werden.

Damit gibt es kein Versagen der Erkennung (anders als bei KNNs), wenn das Ego auf ein bisher unbekanntes Objekt trifft, wie zum Beispiel im Video, als das selbstfahrende Auto plötzlich zwei Kisten auf der Fahrbahn sieht. KNN steht generell für ein Künstliches Neuronales Netz.

Im Stand der Technik besteht ein Bedarf ein autonomes Ansteuern von Vorrichtungen zu schaffen, derart, dass aufwendige Vorarbeiten wie das Bereitstellen von Trainingsdaten und dass Einlernen verhindert bzw. minimiert werden können. Es besteht also ein Bedarf an einem selbstlernenden System, welches auch in der Lage ist, kollektiv zu lernen bzw. abschätzen zu können, was andere Teilnehmer voraussichtlich tun werden bzw. überhaupt tun können. Somit besteht ein Bedarf an einem System, welches mehrere Teilnehmer umfasst, wobei jeder Teilnehmer tatsächlich auch Wissen über die anderen Teilnehmer vorhält und dieses weiter entwickelt, was vorliegend als Empathie bezeichnet wird.

Dementsprechend ist es eine Aufgabe der vorliegenden Erfindung ein Verfahren zum autonomen Ansteuern einer Vorrichtung vorzuschlagen, welches lediglich anhand von bereitgestellten Zielinformationen selbstständig agiert und hierbei Handlungswissen aufbaut. Das vorgeschlagene Verfahren soll Handlungsspielräume von Effektoren jeglicher Vorrichtung erkennen können und ein verbessertes Verfahren oder zumindest ein alternatives Verfahren zum autonomen Ansteuern der Vorrichtung bzw. der Vorrichtungen schaffen. Darüber hinaus ist es eine Aufgabe der vorliegenden Erfindung eine Vorrichtung zum Ausführen des Verfahrens vorzuschlagen sowie eine Systemanordnung aufweisend mehrere der vorgeschlagenen Vorrichtungen. Darüber hinaus ist es eine Aufgabe ein Computerprogrammprodukt und ein computerlesbares Speichermedium vorzuschlagen, welche Befehle vorhalten, welche das Verfahren ausführen.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren zum autonomen Ansteuern einer Vorrichtung vorgeschlagen, aufweisend ein Initialisieren mittels randomisiertem Betätigen von Effektoren und Auslesen einer Vielzahl von internen Sensorikeinheiten eingerichtet zur Messung von internen Vorrichtungseigenschaften und einem Auslesen von einer Vielzahl von externen Sensorikeinheiten eingerichtet zur Messung von externen Umgebungseigenschaften; ein Abspeichern von Wechselbeziehungen, welche zwischen dem Betätigen der Effektoren und den ausgelesenen Vorrichtungseigenschaften und Umgebungseigenschaften bestehen als Handlungsanweisungen, derart, dass eine Handlungsanweisung ein Ausgangstripel von Betätigen, Vorrichtungseigenschaften und Umgebungseigenschaften in ein Zieltripel überführt; und ein Ansteuern der Vorrichtung gemäß mindestens einer vordefinierten Zielvorrichtungseigenschaft und/ oder mindestens einer vordefinierten Zielumgebungseigenschaft unter Verwendung von mindestens einer abgespeicherten Handlungsanweisung, welche angibt wie die mindestens eine vordefinierte Zielvorrichtungseigenschaft und/ oder die mindestens eine vordefinierte Zielumgebungseigenschaft anhand des Ausgangstripels und des Zieltripels eingestellt wird, wobei das Verfahren lernend iteriert wird, in dem stets neue Handlungsanweisungen erkannt werden, welche jeweils ein Ausgangstripel in ein Zieltripel überführen und diese Handlungsanweisungen zum Ansteuern der Vorrichtung gespeichert werden.

Das vorgeschlagene Verfahren dient dem autonomen Ansteuern, das heißt also dem Erstellen von Handlungsanweisungen, einer Vorrichtung, welche generell physisch ausgeprägt ist. Hierbei kann es sich um ein Automobil handeln oder aber auch um einen Roboter oder eine Produktionsanlage. Bezüglich der Mobilität sind vorliegend keinerlei Einschränkungen vorgesehen, sodass sich die Vorrichtung an Land, in der Luft oder auf dem Wasser oder sogar unter dem Wasser bewegen kann. Autonom heißt in diesem Zusammenhang, dass das Verfahren dafür sorgt, dass die Vorrichtung selbsttätig lernt und auch selbsttätig erkennt, welche Handlungsmöglichkeiten zur Verfügung stehen. Diese können erlernt werden und es wird mittels der Sensorik erlernt, welche Handlung von welchem Ausgangspunkt zu welchem Ergebnis führt. Generell ist es möglich, dass sich die Vorrichtung eigene Zielvorgaben bereitstellt oder aber die Zielvorgaben werden extern übermittelt. Bei eigenen Zielvorgaben kann es sich beispielsweise um die Aufrechterhaltung der Betriebsfähigkeit handeln. Eine interne Zielsetzung kann es beispielsweise sein bei einem niedrigen Batteriestand eine Ladestation aufzusuchen. Eine externe Zielsetzung kann dadurch übermittelt werden, dass angegeben wird, welche Aufgabe bzw. welche Tätigkeit die Vorrichtung erledigen soll.

In einem vorbereitenden Verfahrensschritt erfolgt ein Initialisieren mittels randomisierten Betätigens von Effektoren. Ein Effektor ist generell eine physische Einheit, welche einen Einfluss auf die reale Welt hat. Dies kann sich beispielsweise auf die Vorrichtung selbst auswirken, wie Lenken, Beschleunigen, Bremsen etc., und/ oder auf die gezielte Manipulation von Objekten durch zum Beispiel Roboterarme, direkt oder mit Werkzeugen, oder durch Instrumente mit Fernwirkung, seien sie Geschosse oder Strahlen oder zum Beispiel Mittel zur Brandbekämpfung wie Wasser oder Löschschäume. Bei dem Beispiel des Automobils kann es sich um die Bremse, dem Gaspedal etc. aber auch um Scheinwerfer, Blinker usw. handeln. Die Effektoren werden betätigt und sodann wird anhand der internen und externen Sensorik gemessen, welche Auswirkungen diese Handlungen haben. Dies wird mitprotokolliert und kann sodann im weiteren Verfahrensverlauf verwendet werden. Auf diese Art und Weise werden Handlungen erlernt und diese in späteren Verfahrensschritten zielführend eingesetzt.

Da die vorgeschlagene Vorrichtung bzw. das vorgeschlagene Verfahren gänzlich ohne initialem Wissen durchgeführt bzw. angesteuert werden kann, handelt es sich bei dem vorbereitenden Schritt um ein randomisiertes Betätigen, also ein willkürliches Betätigen, da erst erlernt werden muss, welche Handlung zu welchem Ergebnis führt. In weiteren Iterationen des Verfahrens erfolgt dann ein zielgerichtetes Betätigen der erlernten Handlungen. Bei dem randomisierten Betätigen werden die Systemparameter der Effektoren abgeprüft und beispielsweise ein Roboterarm wird in alle möglichen Positionen verbracht. Dies wird jeweils mitprotokolliert und es wird erkannt, welche Aktion des Effektors sich wie auf die reale Welt auswirkt. Bei dem Beispiel eines Scheinwerfers ist es möglich, dass dieser nur die Parameter an und aus bereitstellt. Sodann erfolgt also ein An- und Ausschalten und es wird mittels der externen Sensorik gemessen, welchen Einfluss der Scheinwerfer auf die Umwelt hat und mittels der internen Sensorik werden Betriebsparameter des Scheinwerfers, wie beispielsweise eine Temperaturentwicklung, gemessen. Bei weiterentwickelten LED-Scheinwerfern ist es zudem möglich, sowohl die Farbe als auch die Intensität einzustellen. Dies wird mittels randomisierten Betätigens durchprobiert und sodann interne und externe Resultate protokolliert.

Erfindungsgemäß sind interne Sensorikeinheiten und externe Sensorikeinheiten vorgeschlagen. Intern und extern bezieht sich hierbei nicht auf die Anordnung der Sensorikeinheiten, sondern vielmehr wird gemäß der vorliegenden Erfindung damit bezeichnet, dass die Sensorikeinheiten bezüglich der Vorrichtung externe Gegebenheiten messen oder analog dazu interne Gegebenheiten. Interne Gegebenheiten sind alle Systemparameter der Vorrichtung an sich. Externe Gegebenheiten sind Umgebungsvariablen, also von Gegenständen, die die Vorrichtung umgeben. Somit werden also mittels der internen Sensorikeinheiten Vorrichtungseigenschaften gemessen und mittels externen Sensorikeinheiten Umgebungseigenschaften. Weist beispielsweise die Vorrichtung einen bestimmten Batteriezustand auf, so handelt es sich hierbei um einen internen Parameter. Wird mittels eines Roboterarms ein Gegenstand von A nach B transferiert, so handelt es sich hierbei um einen externen Zustand, wobei der Zustand des Roboterarms wiederum ein interner Zustand ist. Typischerweise sind also interne und externe Parameter in Wechselwirkung und Aktionen bewirken beispielsweise immer einen verringerten Batteriezustand, während diese Aktionen wiederum auf externe Eigenschaften einwirken. In anderer Richtung ist es eine Wechselwirkung, dass mittels Effektoren die Vorrichtung an eine Ladesäule herangeführt werden kann und sodann wird ein Ladevorgang eingeleitet, welcher wiederum den internen Batteriezustand beeinflusst.

Die erfassten Wechselbeziehungen werden sodann abgespeichert und somit wird protokolliert, wie das Betätigen der Effektoren die internen und externen Parameter beeinflusst. Die Vorrichtungseigenschaften werden also mitsamt den Umgebungseigenschaften abgespeichert und somit werden Handlungsanweisungen definiert. Das Betätigen der Effektoren ist also eine Handlung die sowohl die Vorrichtung an sich als auch die Umgebung beeinflusst. Fährt beispielsweise die Vorrichtung von einem ersten geographischen Punkt zu einem zweiten geographischen Punkt so ändert dies die Umgebung der Vorrichtung, was ein externer Parameter ist und dies ändert auch den internen Zustand der Vorrichtung, beispielsweise durch eine Temperaturentwicklung oder einer Veränderung des Batteriezustands. Somit kann also ein Tripel abgespeichert werden, welches angibt, wie der interne Zustand war, wie der externe Zustand war und welche Handlung sodann ausgeführt wird. Dies wird überführt in einen neuen internen Zustand und einen neuen externen Zustand. Somit besteht also ein Ausgangstripel vom Betätigen der Effektoren, Vorrichtungseigenschaften und Umgebungseigenschaften und dies wird in ein Zieltripel überführt. In dem Zieltripel können der neue interne Zustand, der neue externe Zustand sowie mögliche Handlungen spezifiziert werden.

Das Konzept der Tripel soll lediglich den allgemeinen Übergang der Systemzustände verdeutlichen. Generell ist es alternativ auch möglich, dass interne Zustände, externe Zustände mittels einer Funktion in einen neuen internen Zustand und einen neuen externen Zustand überführt werden. Somit besteht also die Handlung in einer Abbildungsfunktion von einem ersten Tupel in einen zweiten Tupel. Der Fachmann erkennt hierbei, dass die Mächtigkeit beider Beschreibungen gleichwertig ist. Entweder es wird also ein Ausgangstupel in einen Zieltupel mittels einer Funktion überführt oder aber es wird ein Eingangstripel gebildet, was interne Zustände, externe Zustände und eine Handlung spezifiziert, wobei diese Handlung sodann zu einem Zieltripel führt, welches einen neuen internen Zustand, einen neuen externen Zustand und ein weiteres Feld aufweist. Das weitere Feld kann entweder leer bleiben, wobei es jedoch bevorzugt ist, dass hier mindestens eine Handlung ausgeführt wird, die nunmehr in diesem Zustand möglich ist. Das letzte Feld kann auch derart belegt werden, dass hier beispielsweise ein Vektor eingeführt wird, der Kennungen weiterer Handlungen beinhaltet.

Um dies an einem Beispiel zu verdeutlichen, kann die Vorrichtung den Effektor namens Motorantrieb betätigen und vorwärtsfahren. Was nunmehr mitprotokolliert wird, ist ein Ausgangstripel eines internen Zustands, nämlich einem Ladestand der Batterie, einem externen Zustand, nämlich ein Bildsignal einer physischen Umwelt und einer Handlungsanweisung, nämlich "Fahren". Dieser Ausgangsvektor bzw. das Ausgangstripel wird nunmehr überführt in ein Zieltripel, welches einen neuen Batterieladezustand aufweist, ein neues Bildsignal der Umgebung sowie Handlungen, die nunmehr möglich wären, beispielsweise Vorwärtsfahren oder Rückwärtsfahren. Während der Handlung der Vorwärtsbewegung ist es auch möglich zu spezifizieren, dass hierbei beispielsweise ein Bremsen oder ein Betätigen der Scheinwerfer möglich wäre.

In einem alternativen Beispiel wird der Ausgangstupel des Batteriezustands und des Bildsignals der Umgebung mittels der Funktion "Bewegen" übergeführt in ein Zieltupel, welches den neuen Batteriezustand beschreibt sowie ein neues Bildsignal der Umgebung. Somit erfolgt also ein mitprotokollieren, was bei einer bestimmten Handlung intern und extern erfolgt. Dieses Wissen kann in weiteren Handlungsschritten in Richtung eines vordefinierten Ziels wiederverwendet werden.

Im weiteren Verfahrensschritten kann ein Bereitstellen von Zielvorrichtungseigenschaften oder vordefinierten Zielumgebungseigenschaften erfolgen. Somit kann die Vorrichtung derart angesteuert werden, dass sich die mindestens eine vordefinierte Zielvorrichtungseigenschaft und/ oder die mindestens eine vordefinierten Zielumgebungseigenschaft einstellt. Aus den vorhergehenden Verfahrensschritten sind die Handlungsanweisungen bekannt, und somit ist also bekannt, wie ein interner Zustand und ein externer Zustand in einen weiteren internen Zustand und einen weiteren externen Zustand überführt werden kann. Hierzu dienen die Zielvorgaben, also die Zielvorrichtungseigenschaft und/ oder die Zielumgebungseigenschaft. Diese Zieleigenschaften bestimmen also was erreicht werden soll und dies erfolgt dadurch, dass die Handlungsanweisungen ausgeführt werden. Es wird also ausgelesen, in welchem Zustand sich die Vorrichtung befindet und sodann werden abgespeicherte Handlungen ausgewählt, welche ausgehend von dem Ist-Zustand den Soll- Zustand erreichen. In einem bevorzugten Fall reicht hierzu das Ausführen einer Handlungsanweisung, welche sofort die Zielvorgaben erreicht. In einem typischen Fall wird es jedoch so sein, dass mittels mehrerer Handlungseigenschaften sukzessive der Ausgangs-Zustand in den Soll-Zustand überführt wird. Es werden also mehrere Handlungsanweisungen derart verknüpft, dass sich letztendlich die Zielvorgaben einstellen.

Um dies in einem Beispiel zu verdeutlichen, kann das Verfahren identifiziert haben, dass die Vorrichtung sich von A nach B nach C nach D bewegen kann. Somit werden also die Handlungsanweisungen abgespeichert, die vorsehen, dass das Auto von A nach B fahren kann, von B nach C sowie von C nach D. Es wird implizit auch abgespeichert, dass das Auto von A nach C fahren kann und von A nach D fahren kann. Darüber hinaus wird abgespeichert, dass das Auto von C nach D fahren kann. Diese Möglichkeiten werden nunmehr verwendet und wenn eine Zielvorgabe vorliegt, die besagt, dass das Auto von A nach C fahren soll, hat die Vorrichtung zwei Optionen zur Auswahl, nämlich von A nach B nach C zu fahren oder von A nach C zu fahren. Generell wäre es auch möglich von A nach D zu fahren und sodann von D nach C zu fahren. Welche Auswahl erfolgt, kann ebenfalls in den Zielvorgaben definiert werden. Beispielsweise kann eine Maximaldauer der Fahrt in Zeitangaben definiert werden. Darüber hinaus kann ein maximaler Energieverbrauch definiert werden. In vorbereitenden Verfahrensschritten werden also randomisiert Handlungen ausgeführt und diese liegen dann zur Laufzeit vor. Generell kann das Verfahren ein randomisiertes Betätigen der Effektoren vorsehen es kann aber auch additiv vorsehen, dass die bereits gelernten Handlungsanweisungen wiederverwendet werden. Somit kann eine Lernphase des randomisierten Betätigens durchgeführt werden, sowie eine Ausführungsphase, welche auf bereits gespeicherte Handlungen zurückgreift. Dies kann auch in beliebiger Reihenfolge alterniert werden. Darüber hinaus wird auch in der Ausführungsphase mittels der internen Sensorik und der externen Sensorik das abgespeicherte Handlungswissen verfeinert und es werden somit neue Handlungsanweisungen generiert, die bezüglich einer anderen Zielvorgabe bevorzugt sein können. Darüber hinaus können sich auch während dem Ausführen einer Handlung die Zielvorgaben derart ändern, dass beispielsweise ein Batteriezustand kritisch wird und insofern wird die Zielvorgabe der eigenen Operabilität derart erhöht, dass das Verfahren erkennt, dass es nunmehr notwendig ist, eine Ladestation anzufahren. Somit ergibt sich zumindest temporär eine überlagernde Zielvorgabe, nämlich die eine Ladestation anzufahren, auch wenn dadurch nicht das Ziel erreicht wird die ursprüngliche Zielkoordinate anzufahren. Sobald ein gewisser Ladezustand erreicht ist, wird die Zielvorgabe der eigenen Operabilität wieder zurückgestuft und die Zielvorgabe des Anfahrens des Zieles wird derart erhöht, dass die Fahrt nunmehr fortgesetzt wird.

Gemäß der vorliegenden Erfindung wird das Verfahren lernend iteriert, derart dass stets neue Handlungsanweisungen erkannt werden, welche jeweils ein Ausgangstripel in ein Zieltripel überführen und diese Handlungsanweisungen zum Ansteuern der Vorrichtung gespeichert werden. Dies hat den Vorteil, dass das Verfahren ganz oder zumindest teilweise derart etabliert wird, dass stets neue Situationen erkannt werden und Handlungsanweisungen derart geschaffen werden, dass Effektoren betätigt werden. So kann das Verfahren derart variiert werden, dass das Betätigen der Effektoren nicht mehr randomisiert erfolgt, sondern vielmehr können bestehende Handlungsanweisungen kombiniert werden oder es ist auch möglich, dass Teile vorhandener Handlungsanweisungen randomisiert werden, sodass neue mögliche Handlungsanweisungen geschaffen werden bezüglich derer auch klar ist, welche Wechselwirkungen sie auslösen. Darüber hinaus kann das Verfahren auch derart etabliert werden, dass ausgehend von dem Abspeichern von Wechselbeziehungen bis zum Ansteuern der Vorrichtung etabliert wird. Somit werden auch bei einem Ausführen von bekannten Handlungsanweisungen Wechselbeziehungen abgespeichert und es können neue Parameter identifiziert werden. So kann beispielsweise erkannt werden, dass bei einem zweimaligen Ausführen einer gleichen Handlungsanweisung andere Zielparameter entstehen. Dies kann zum Beispiel dann der Fall sein, wenn bei einer Autofahrt ein Seitenwind aufkommt. Dies wird abgespeichert und sodann wird mittels des externen Sensors erkannt, dass hier ein Wind aufgetreten sein muss. Somit wird ein neues Ausgangstripel geschaffen und es kann mittels der Effektoren randomisiert ausprobiert werden, wie in einer solchen Situation gegengelenkt werden soll. Somit wurden also neue Wechselbeziehungen erkannt und wird nochmals ein derartiges Ausgangstripel identifiziert, ist nunmehr klar, welche Handlung ausgeführt werden muss, um das gewünschte Zieltripel zu erreichen.

Gemäß einem weiteren Aspekt der vorliegenden Erfindung erfolgt das Auslesen von internen und/ oder externen Effektoren derart, dass einzelne Stützwerte abgespeichert werden und Zwischenwerte interpoliert und/ oder extrapoliert werden. Dies hat den Vorteil, dass die Stützwerte entsprechend ihrer Verfügbarkeit gewählt werden können und dass diese auch derart geschätzt werden können, dass nicht an jedem möglichen Wert eine Messung vorliegen muss. Vielmehr kann anhand von vorhandenen Messungen geschätzt werden, welche Werte sich nach normalen Umständen ergeben würden. Somit können weitere Stützwerte mathematisch errechnet werden.

Gemäß einem weiteren Aspekt der vorliegenden Erfindung wird die Zielvorrichtungseigenschaft und/ oder die Zielumgebungseigenschaft mindestens temporär von einer Vorrichtungseigenschaft und/ oder einer Umgebungseigenschaft beeinflusst. Dies hat den Vorteil, dass die Zielvorgaben auch geändert werden können bzw. einer Priorisierung unterliegen. Soll beispielsweise von einem ersten geographischen Punkt an einen zweiten geographischen Punkt gefahren werden, so kann zwischenzeitlich das Anfahren einer Ladestation priorisiert werden, da ansonsten das Endziel nicht erreicht werden würde. Somit ergibt sich also der Vorteil, dass stets garantiert wird, dass die Zielvorgaben erreicht werden und es wird ein ausfallsicheres Verfahren geschaffen.

Gemäß einem weiteren Aspekt der vorliegenden Erfindung werden mehrere Handlungsanweisungen zu einer Choreografie kombiniert, welche ein Ausgangstripel in ein Zieltripel überführt. Dies hat den Vorteil, dass auch komplexe, das heißt zusammengesetzte Handlungen ausgeführt werden können und mit Fortschreiten des Verfahrens beziehungsweise dem Etablieren des Verfahrens werden stets neue Handlungsanweisungen geschaffen, die zu immer effizienteren Choreografien zusammengefügt werden. Somit wird also das vorgeschlagene Verfahren iterativ verbessert.

Gemäß einem weiteren Aspekt der vorliegenden Erfindung wird anhand von externer Sensorik ein Objekt erfasst und dessen erfasste Parameter mit Vorrichtungseigenschaften und/ oder Handlungsanweisungen der Vorrichtungen verglichen. Dies hat den Vorteil, dass sich die Vorrichtung quasi selbst klonen kann beziehungsweise von den eigenen Eigenschaften auf die Eigenschaften des Objekts schließen kann. Dies kann auch als Empathie bezeichnet werden. Wird mittels der externen Sensorik beispielsweise eine Vorrichtung identifiziert, die ähnliche Charakteristika aufweist, wie die ausführende Vorrichtung, so wird davon ausgegangen, dass diese neue erkannte Vorrichtung ähnliche Fähigkeiten aufweist wie die ausführende Vorrichtung. Um dies in einem Beispiel zu verdeutlichen, wird auf ein Fahrzeug abgestellt, welches die vorgeschlagene Erfindung ausführt. Dieses erste Fahrzeug führt also das vorgeschlagene Verfahren aus und erkennt mittels eines externen Sensors, hier einer bildgebenden Einheit, eine weitere, also zweite Vorrichtung. Die erste Vorrichtung bzw. das erste Fahrzeug hat gelernt, dass es bei einer bestimmten Geschwindigkeit nur bedingt bremsen kann und nur bedingt quer lenken kann. Das erste Fahrzeug erkennt nunmehr, dass das zweite Fahrzeug eine ähnliche Abmessung aufweist und eine ähnliche Geschwindigkeit fährt, wie das erste Fahrzeug. Sodann werden die Handlungsanweisungen in das zweite Fahrzeug konzeptionell projiziert und das erste Fahrzeug erkennt, dass das zweite Fahrzeug nur bedingt bremsen kann und nur sehr bedingt einen Richtungswechsel durchführen kann. Wird nunmehr auf einer Autobahn einen Überholvorgang eingeleitet, so erkennt das erste Fahrzeug, dass das zweite Fahrzeug bremsen könnte oder aber auch ebenfalls einen Spurwechsel durchführen könnte. Somit wird also von dem eigenen Verhalten beziehungsweise der möglichen Ausgangstripletts und der möglichen Zieltripletts gefolgert, dass dieses Objekt ähnliche Eigenschaften aufweist.

Darüber hinaus kann mittels der externen Sensorik das Verhalten des erkannten zweiten Fahrzeugs überwacht werden und sodann kann der eigene Datenspeicher aktualisiert werden, der Wechselbeziehungen abgespeichert. Somit können also auch Ausgangstripletts und Zieltripletts erkannt werden und es kann wiederum von dem zweiten Fahrzeug auf das erste Fahrzeug geschlossen werden.

Gemäß einem weiteren Aspekt der vorliegenden Erfindung werden die erfassten Parameter zur Prädiktion eines Verhaltens des erfassten Objekts verwendet. Dies hat den Vorteil, dass erkannt wird, dass die eigene Vorrichtung in einer bestimmten Situation eine bestimmte Handlungsanweisung ausführt, sodass das weitere erkannte Objekt in derselben Situation sehr wahrscheinlich auch die gleiche Handlung ausführen würde. Es werden also die eigenen Handlungen bzw. ausgeführten Handlungsanweisungen mitprotokolliert und sodann wird davon ausgegangen, dass sich das erfasste Objekt gleich oder zumindest ähnlich verhalten könnte.

Gemäß einem weiteren Aspekt der vorliegenden Erfindung werden Wechselbeziehungen des erfassten Objekts zwischen dessen Parameter und dessen Handlungen zur Erstellung von Handlungsanweisungen der Vorrichtung verwendet. Dies hat den Vorteil, dass auch externe erkannte Wechselbeziehungen bezüglich der vorgeschlagenen Vorrichtung bzw. der Vorrichtung, welche mittels des Verfahrens angesteuert wird, verwendet werden können. Somit schafft also die Vorrichtung nicht alleine Wechselbeziehungen, welche ausgewertet werden, sondern vielmehr kann auch die externe Welt beobachtet werden und sodann Rückschlüsse auf das Überführen von Ausgangstripel in Zieltripel erkannt werden.

Gemäß einem weiteren Aspekt der vorliegenden Erfindung liegt ein Effektor als ein Motor, ein Greifarm, eine Fortbewegungseinheit, ein Antrieb, ein Scheibenwischer, ein Blinker, eine Leuchte, eine Lenkung oder eine ausführende Einheit vor. Dies hat den Vorteil, dass anhand der vorgeschlagenen Vorrichtung bzw. der verfahrensgemäß anzusteuernder Vorrichtung alle möglichen Hardwareeinheiten vorliegen können. Die Ausführung ist nur beispielhaft und nicht abschließend, sodass jegliche physische Einheit gemäß dem vorgeschlagenen Verfahren autonom angesteuert werden kann.

Gemäß einem weiteren Aspekt der vorliegenden Erfindung erfassen interne Sensorikeinheiten einen Effektorzustand, eine Effektoreinstellung, eine Effektorposition, eine Größe, ein Gewicht, eine Abmessung, eine Geschwindigkeit, eine Beschleunigung, ein Abbremsen, einen Batteriestand, eine Position, und/ oder einen Systemparameter der Vorrichtung. Dies hat den Vorteil, dass die internen Sensorikeinheiten alle Parameter und Zustände der Vorrichtung ausmessen können, die das Verfahren ausführt bzw. die durch das Verfahren ausgeführt bzw. angesteuert wird.

Gemäß einem weiteren Aspekt der vorliegenden Erfindung erfassen externe Sensorikeinheiten einen Abstand, ein Objekt, ein Lidarsignal, ein Bildsignal, eine Position, eine Größe, eine Abmessung, ein Akustiksignal und/ oder einen externen Parameter. Dies hat den Vorteil, dass die komplette Umwelt der Vorrichtung analysiert und erfasst werden kann. Hierzu sind alle möglichen Sensoren einzeln oder in Kombination möglich, die die Umwelt in irgendeiner Art und Weise erkennen.

Die Aufgabe wird auch gelöst durch eine Vorrichtung eingerichtet zum Ausführen eines Verfahrens nach einem der vorhergehenden Ansprüche, aufweisend eine Initialisierungseinheit eingerichtet zum Initialisieren mittels randomisiertem Betätigen von Effektoren und Auslesen einer Vielzahl von internen Sensorikeinheiten eingerichtet zur Messung von internen Vorrichtungseigenschaften und einem Auslesen von einer Vielzahl von externen Sensorikeinheiten eingerichtet zur Messung von externen Umgebungseigenschaften; eine Speichereinheit eingerichtet zum Abspeichern von Wechselbeziehungen, welche zwischen dem Betätigen der Effektoren und den ausgelesenen Vorrichtungseigenschaften und Umgebungseigenschaften bestehen als Handlungsanweisungen, derart, dass eine Handlungsanweisung ein Ausgangstripel von Betätigen, Vorrichtungseigenschaften und Umgebungseigenschaften in ein Zieltripel überführt; und eine Steuerungseinheit eingerichtet zum Ansteuern der Vorrichtung gemäß mindestens einer vordefinierten Zielvorrichtungseigenschaft und/ oder mindestens einer vordefinierten Zielumgebungseigenschaft unter Verwendung von mindestens einer abgespeicherten Handlungsanweisung, welche angibt wie die mindestens eine vordefinierte Zielvorrichtungseigenschaft und/ oder die mindestens eine vordefinierte Zielumgebungseigenschaft anhand des Ausgangstripels und des Zieltripels eingestellt wird, wobei das durch die Vorrichtung auszuführende Verfahren lernend iteriert wird, in dem stets neue Handlungsanweisungen erkannt werden, welche jeweils ein Ausgangstripel in ein Zieltripel überführen und diese Handlungsanweisungen zum Ansteuern der Vorrichtung gespeichert werden.

Die Aufgabe kann auch durch eine Anordnung aufweisend mehrere Vorrichtungen, welche kommunikationstechnisch gekoppelt sind und Handlungsanweisungen austauschen, gelöst werden.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. Die Figuren zeigen:

Figur 1: ein schematisches Ablaufdiagramm eines Verfahrens zum autonomen Ansteuern einer Vorrichtung gemäß einem Aspekt der vorliegenden Erfindung;

Figur 2: ein Diagramm, anhand dessen interne und/oder externe Eigenschaften geschätzt werden können. So können interne und/ oder externe Parameter ausgemessen werden und zwischen den Stützstellen kann interpoliert werden bzw. es können weitere Stützstellen extrapoliert werden;

Figur 3: eine Darstellung einer realweltlichen Situation, bei der ein Kind eine Straße überqueren will und die vorgeschlagene Vorrichtung die Situation erkennt und daraus belehrend;

Figur 4: eine realweltliche Situation in einem Straßenverkehr, in der die vorgeschlagene Vorrichtung bzw. das vorgeschlagene Verfahren gemäß einem Aspekt der vorliegenden Erfindung Anwendung findet; und

Figur 5: eine weitere realweltliche Situation in einem Straßenverkehr, wobei die Vorrichtung eine Kurvenfahrt gemäß einem weiteren Aspekt der vorliegenden Erfindung einübt.

Figur 6A: ein schematisches Ablaufdiagramm eines Verfahrens zum autonomen Ansteuern einer Vorrichtung gemäß einem Aspekt der vorliegenden Erfindung in der juvenilen Phase mit dem vorrangigen Ziel der Präzisierung der eigenen Handlungen; und

Figur 6B:  ein schematisches Ablaufdiagramm eines Verfahrens zum autonomen Ansteuern einer Vorrichtung gemäß einem Aspekt der vorliegenden Erfindung in der adulten, der Anwendungsphase für das Erreichen der eigenen Ziele unter Berücksichtigung und Vorhersage der Verhaltensweisen der in einer Situation relevanten weiteren Objekte.

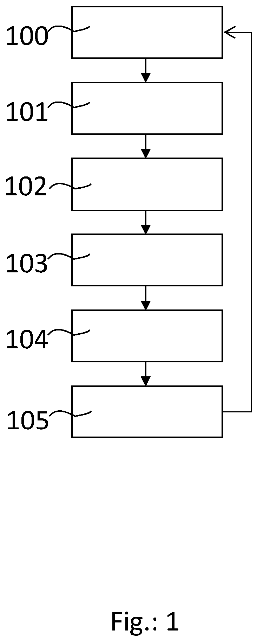

Figur 1 zeigt in einem schematischen Ablaufdiagramm ein Verfahren zum autonomen Ansteuern einer Vorrichtung, aufweisend ein Initialisieren 100 mittels randomisiertem Betätigen 101 von Effektoren und Auslesen 102 einer Vielzahl von internen Sensorikeinheiten eingerichtet zur Messung von internen Vorrichtungseigenschaften und einem Auslesen 103 von einer Vielzahl von externen Sensorikeinheiten eingerichtet zur Messung von externen Umgebungseigenschaften; ein Abspeichern 104 von Wechselbeziehungen, welche zwischen dem Betätigen 101 der Effektoren und den ausgelesenen Vorrichtungseigenschaften und Umgebungseigenschaften bestehen als Handlungsanweisungen, derart, dass eine Handlungsanweisung ein Ausgangstripel von Betätigen 101, Vorrichtungseigenschaften und Umgebungseigenschaften in ein Zieltripel überführt; und ein Ansteuern 105 der Vorrichtung gemäß mindestens einer vordefinierten Zielvorrichtungseigenschaft und/ oder mindestens einer vordefinierten Zielumgebungseigenschaft unter Verwendung von mindestens einer abgespeicherten 104 Handlungsanweisung, welche angibt wie die mindestens eine vordefinierte Zielvorrichtungseigenschaft und/ oder die mindestens eine vordefinierte Zielumgebungseigenschaft anhand des Ausgangstripels und des Zieltripels eingestellt wird, wobei das Verfahren lernend iteriert wird, in dem stets neue Handlungsanweisungen erkannt werden, welche jeweils ein Ausgangstripel in ein Zieltripel überführen und diese Handlungsanweisungen zum Ansteuern der Vorrichtung gespeichert werden.

Das hier vorgestellte Modell verwendet gemäß einem Aspekt der vorliegenden Erfindung ein zentrales Template, mit der sich die KI in der unbekannten und sich immer wieder verändernden Welt zurechtfindet. Dieser Ansatz erlaubt es, kurzfristige Verhaltensprognosen der beobachteten Objekte zu erstellen, um so die Entwicklung der Situationen abzuschätzen, um das beim Entwurf der eigenen Handlungen einzubeziehen. Er ermöglicht auch das Lernen aus Beobachtung und Empathie. Aspekte der Erfindung sind:

- Zentrales Template als Zentrum der KI zur Erfassung aller Objekte einer Situation;
- Datenspeicherung, die ein Erkennen von Gesetzen ermöglicht;
- Verhaltensprognosen aller beobachteten Objekte einer Situation;
- Empathiefähigkeit, die auf dem Zentralen Template basiert;
- Fähigkeit des Lernens aus Beobachtungen;
- Erkennen von nicht direkt beobachtbaren Einflussfaktoren;
- Erkennen von Naturgesetzen und kausalen Abhängigkeiten;
- computergerechte Form von Theorien, die selbst erstellt, gespeichert, wiederverwendet und laufend verbessert werden kann; und/ oder
- Selbstbewertung und die Bewertung der selbsterstellten Theorien als Grundlage der Erkenntnis, des Lernens und der Auswahl der jeweils besten Theorie für das Erreichen der eigenen Ziele.

Als Beispiel wird ein Auto, das sich nach diesen Ideen verhält, beschrieben. Wie beurteilt es ein Kind oder eine Kiste, wie einen Überholvorgang auf der Autobahn, oder wie erkennt es das Gravitationsgesetz und Seitenwinde (als Beispiel für das Erkennen von Kausalitäten und nicht manifestierbaren Objekten). Weiter wird beschrieben, wie über Empathie das Lernen aus Beobachtung möglich ist. All das zeigt, dass die Möglichkeiten dieser KI über das Fahren von Autos hinausgeht. Die wesentliche Grundlage ist aber ein physikalisch existierender Roboter in der physikalisch existierenden Umgebung, das andere Objekte direkt oder indirekt beobachtet.

Im Folgenden werden einige Aspekte der vorliegenden Erfindung vorgeschlagen, welche eine beispielhafte Umsetzung des Verfahrens bzw. der Vorrichtung und/ oder der Systemanordnung ermöglichen. Die folgenden Aspekte sind lediglich beispielhaft zu verstehen und können einzeln oder in Kombination angewendet werden.

Mögliche Hardware des Roboters beziehungsweise der vorgeschlagenen Vorrichtung:
Hier wird die technische Ausstattung beschrieben, über die der Roboter oder das Auto gemäß einem Aspekt der vorliegenden Erfindung verfügen kann.

Effektoren:

In einfachen Fällen wie zum Beispiel einem Auto, wären die Effektoren, sieht man einmal von Scheibenwischer, Blinker, Licht, .... ab. Bremsen, Beschleunigen und Lenken, mit diesen der Roboter auf seine Umgebung einwirkt und sei es nur die eigene Ortsveränderung ist auch eine Situationsveränderung.

Interne Sensorik:

Die interne Sensorik zur Messung und Rückmeldung eigener Eigenschaften wie Größe, Gewicht, Geschwindigkeit, Beschleunigung etc. aufgrund der Aktionen der Effektoren. Sie sind notwendig für die Beurteilung der eigenen Maßnahmen und als Voraussetzungen für das Lernen. Damit kann es die eigene Aktion zum Beispiel Stärke des Bremsens und Wirkung (das Ausmaß der negativen Beschleunigung) erkennen, Verbindungen und um Gedächtnis speichern, um so selbstständig zu lernen, und das heißt, die eigenen Handlungen stetig verbessern.
Als eine physikalische Entität in einer physikalischen Umgebung unterliegt der Roboter den physikalischen Gesetzen. Eine gemessene Beschleunigung, also eine Geschwindigkeitsveränderung, ist neben der Masse unter anderem davon abhängig, wie weit das Gaspedal, oder wie stark die Bremse gedrückt wird. Wenn diese Gesetzmäßigkeiten nicht fest einprogrammiert werden sollen, sondern der Roboter dieses selber entdecken, speichern und verwenden soll, benötigt es die interne Sensorik, um die Konsequenzen aus dem Einsatz der Effektoren zu erfahren und speichern zu können. Die interne Sensorik, zum Beispiel eines Autos, erfasst daher Daten wie Größe, Geschwindigkeit, Beschleunigung, etc.

Externe Sensorik:

Die externe Sensorik erfasst gemäß einem Aspekt der vorliegenden Erfindung die Umgebung (Abstände, Objekte etc.) zum Beispiel durch Lidar, Bildbearbeitung etc. Natürlich muss der Roboter in geeigneter Weise Kenntnis über die Umgebung erhalten. Was genau benötigt wird, wird weiter unten näher beschrieben. Welche Systeme aber sich am besten eigenen, soll nicht vorab festgelegt werden, da die Informationserfordernisse aufgrund der Verwendung des zentralen Templates geringer sind. Es muss nicht alles, was theoretisch an Informationen zur Verfügung steht, auch erfasst und verarbeitet werden.

Mögliche Software des Roboters:

Hier werden die Teile beschrieben, mit denen die vorgestellte KI gemäß einem Aspekt der vorliegenden Erfindung ihre Intelligenz erreicht.

Datenspeicherung:

Die Datenspeicherung ist ein hochverfügbarer Datenspeicher für Datentupel, die sich zusammensetzen aus den Daten der internen Sensorik, der Effektoren, die Handlungen und deren Motivationswerte (s.u.). Der Speicher verbindet in geeigneter Weise ausgeführte Handlungen und die damit verbundenen, tatsächlichen, erfahrenen und beobachteten Ergebnisse. Er speichert also nur interne Daten in Tabellen und zum Beispiel keine Pixel eines oder mehrerer Bilder. Es gibt also nur Daten, deren interne Bedeutung bekannt ist.
Ein weiterer Teil dieses Moduls ist gemäß einem Aspekt der vorliegenden Erfindung die wiederholte Prüfung auf eine innere Stimmigkeit der Daten. Damit ist gemeint, sie dürfen keine Widersprüche enthalten, Strukturen, die zu Schleifen oder Zirkel führen etc. Ziel ist, dass aus den Daten sich immer nur eine Entscheidung ergeben darf. Die Routine, die das überprüft, soll auch gespeicherte redundante Daten wieder entfernen, nicht nur um so die Datenbasis so schlank wie möglich zu halten, sondern auch um eine Überadaptierung zu verhindern. Was als redundant angesehen wird, ergibt sich aus der Art der Theoriebildung.

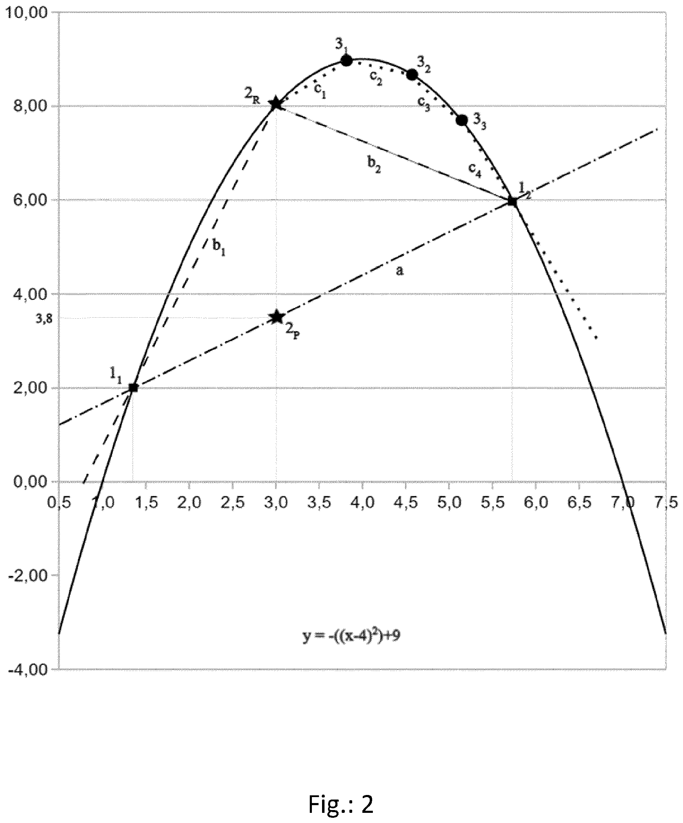

Figur 2 zeigt die Theoriebildung gemäß einem Aspekt der vorliegenden Erfindung:
Das zentrale Template kann mit den hier beschriebenen einfachen Mitteln jede funktionelle Wechselbeziehung nachbilden, abspeichern und für die Prognose verwenden.
Das Bremsen oder Beschleunigen hängen funktional von der beschleunigten Masse und der aufgewendeten Kraft ab. Allerdings ist diese Funktion erst einmal unbekannt, denn die mathematische Funktion der Geschwindigkeitsveränderung dV ist abhängig von den Voraussetzungen Vn (aktuelle Geschwindigkeit, Gewicht etc.) und der Verwendung der Effektoren Em (Kraft auf das Gaspedal, Lenkung,..), also:

$$dV = f(Vn, Em) \qquad\qquad (1)$$

Diese Funktion soll selbst erlernt und nicht einprogrammiert werden, denn so kann das Erlernte später auf die gleiche Weise erweitert, korrigiert und verbessert werden. Die effektive Beschleunigung beim Bremsen (oder Gas geben) ist über die interne Sensorik der gemessenen Beschleunigung a mit der (mathematisch) unabhängigen Variablen der Kraft F (wie stark das jew. Pedal gedrückt wird) und der Masse m nach dem Gesetz $F = m * a$ verbunden. Das Prinzip, mit dem der Roboter selbst diese Gleichung findet, ist einfach. Nehmen wir zur Veranschaulichung eine (andere, beliebige) quadratische Funktion $y = -((x-4)^2)+9$, die nachgebildet werden soll.

Es sei, dass zunächst nur die zwei Messwerte an den Punkten 11 und 12 existieren. Nun sei es, dass an der Stelle x=3 (Punkt 2) eine Prognose p erforderlich ist, was über die Gerade a zwischen 11 und 12 zu einem Wert von y=3,8 führt. Da aber der Fehler zum ex post gemessene Wert y=8,0 viel zu groß ist, wird dieser Punkt 2R bei x=3,0 und y=8.0 in die Erinnerung übernommen. Daraufhin würde bei einer neuen Prognose entweder die Grade b1 zwischen [11,2R] oder b2 zwischen [2R,12] herangezogen werden. Mit der Zeit entstehen in dem obigen Beispiel viele weitere Punkte (31, 32, 33,..), über die der funktionale Zusammenhang von x und y durch die jeweiligen Geraden entlang der Datentupel (c1, c2, c3, ..) mit beliebiger Genauigkeit nachgebildet werden kann. Die Genauigkeit ist nur beschränkt durch (noch) nicht gemachte Erfahrung und der Größe des Erinnerungsspeichers. Natürlich lässt sich das auf, so es die Rechen- und Speicherkapazitäten zulassen, auf beliebig viele Variablen erweitern, statt Geraden werden halt Hyperebenen a1x1 + ... + anxn = const zur Prognose mittels der stückweisen Linearen Inter- oder Extrapolation herangezogen.

Um aber die Anzahl der gespeicherten Eck- oder Datentupel so klein wie möglich zu halten, können diese auch wieder entfernt werden: Wenn sich bei einer ex post Analyse herausstellt, dass ein Datentupel so nahe oder sogar auf der Geraden/Hyperebene zwischen den zwei benachbarten Tupeln liegt, dann kann dieses Tupel als redundant gelöscht werden. Dadurch verringert sich nicht nur der Speicherbedarf, sondern auch der Rechenaufwand und das Verhalten passt sich im Laufe der Zeit immer besser an die tatsächliche, wiewohl nach wie vor unbekannte mathematische Funktion an, was dann zu einem im Laufe der Zeit immer effizienteren Verhalten führt.

Dieses Vorgehen verhindert auch eine Überadaptierung, die man bei Auswahl und Umfang der Trainingsdaten für ein KNN unbedingt berücksichtigen muss. Redundante Erfahrungen werden so nicht immer wieder eingespeichert, was die selten auftretenden Ereignisse, die sogenannten ‚schwarzen Schwäne' mit unter Umständen heftigen Konsequenzen, vollkommen überlagern würden.

Das Speichern von funktionalen Zusammenhängen von Variablen hat noch einen weiteren Vorteil, da auf diese Weise zugleich auch jede mögliche Umkehrfunktion gespeichert ist, da die gespeicherten Datentupel nicht unterscheiden, welche Werte bei ihrem Auftreten die 'abhängigen' und welche die ‚unabhängigen' waren. In der obigen Funktion ist x die unabhängige Variable und der zugehörige y-Wert kann über die Funktion $y = -((x-4)^2)+9$ ermittelt werden. In der Datenbank müsste nach dem x-Wert gesucht werden und, wenn der x-Wert nicht explizit gespeichert ist, kann näherungsweise der y-Wert über die beiden nächsten beiden x-Werten ermittelt werden. Nun kann man aber in dem Speicher auch einfach nach dem y-Wert suchen und über die stückweise Lineare Inter- oder Extrapolation einen x-Wert ermitteln - das ist sehr viel einfacher als zu versuchen, die Umkehrfunktion zum Beispiel der obigen Gleichung zu ermitteln.

Auf diese sehr einfache Weise kann jeder funktioneller Zusammenhang beliebig genau nachgebildet werden, Voraussetzung ist nur ein ausreichendes Handlungstraining, wie bei einer komplexen Sportart. Natürlich kann auch der akzeptierte Fehler ε im Laufe der Zeit geändert und angepasst werden, sei es, dass er verkleinert werden muss, damit sich die benötigte Präzision erhöht, oder sei es, dass er vergrößert werden kann, um den Speicher- und der Rechenaufwand zu verringern, da das ja wieder die Anzahl der gespeicherten Eck- und Datenpunkte beeinflusst, es ist eine stetige Optimierung im laufenden Prozess.

Im Rahmen dieser Erfindung definiert sich gemäß einem Aspekt der vorliegenden Erfindung eine Theorie über die Regeln und Gesetze einer aktuellen Situation daher als ein in sich geschlossener, konsistenter Datensatz, aus dem sich mittels der stückweisen Linearen Inter- oder Extrapolation die Prognosen dieser Theorie von dem Roboter errechnen lassen. Der Datensatz besteht aus eigenen Messergebnissen und eventuell auch aus den Parametern erstellter Alter Egos. So kann der Roboter jede seiner Theorien selbst ermitteln, abspeichern, wiederverwenden und verbessern. Im Rahmen der Selbstbewertung (s.u.) ist er auch in der Lage, in einer Situation die spezifisch beste Theorie (Datensatz), die mit der höchsten Kompetenz (s.u.) auszuwählen und anzuwenden.

Handlungen:

Eine Handlung stellt gemäß einem Aspekt der vorliegenden Erfindung eine geordnete Abfolge von Effektoreneinsätze dar, um ein Ziel zu erreichen. Mithilfe der dem Roboter bekannten funktionellen Zusammenhänge zwischen Effektoren, den internen Parametern und der bekannten Auswirkungen können Handlungen entworfen werden. Zunächst, in der juvenilen Lernphase (s.u.), werden einfache Handlungen gesetzt. Die KI lernt, Gas geben und bremsen, dann Gas geben, warten und an einer Begrenzung anstoßen (extern gebremst mit einer 'Verletzungsgefahr'), Gas geben, Lenken, Bremsen und so weiter. Diese einfachen Handlungen werden dann zu immer komplexeren 'Choreographien' zusammengesetzt und diese werden dann weiter optimiert, in dem zum Beispiel das Bremsen durch einen schwächer werdenden Pedaldruck bei abnehmender Geschwindigkeit weicher wird und zum Beispiel das Kurvenfahren flüssiger gestaltet wird. Erreicht wird die Optimierung durch einen Motivationswert (s.u.), der eine Art interne Bewertung der ausgeführten Handlung darstellt. So wird von den gespeicherten (Teil-) 'Choreographien' diejenige mit dem höchsten Motivationswert gewählt. Auf diesem Weg kann die KI selbstständig den Einsatz seiner Effektoren laufend verbessern. Außerdem können über den Bezug zurzeit und die gemachten Handlungserfahrungen die eigene Situation in zukünftigen Zeitpunkten prognostiziert werden, welches die Grundlage für die eigene Handlungsplanung ist.

Motivationswerte:

Motivationswerte spiegeln eine Art Belohnung wider. Einerseits werden sie intern ermittelt, nachdem ein selbstgestecktes Ziel erreicht wurde (gelungen), andererseits kann ein Motivationswert auch extern übermittelt werden (gut gemacht). Wenn zum Beispiel eine Fahrstrecke mit starken Lenkbewegungen, geringer Geschwindigkeit und trotzdem hohen Seitbeschleunigungen zurückgelegt wird, erhält diese Handlungsabfolge einen geringeren Motivationswert als das Resultat des 'Trainings', nach dem dieselbe Strecke schneller und trotzdem mit geringeren Seitbeschleunigungen durchquert wird. Das muss natürlich auch im Gedächtnis gespeichert werden.

Die Motivationswerte stellen somit eine Form von nicht festgelegten, intrinsischen Zielen dar. Es können Fernziele wie der Endpunkt einer Reise verbunden werden oder kurzfristige Zwischenziele wie der Besuch einer Tankstelle, wenn der Tank leer ist: Mit abnehmender Tankfüllung steigt langsam der Motivationswert für 'Tanken', bis er größer ist als der des Fernziels. Das Verfolgen des Fernziels wird unterbrochen zugunsten des Tankens und danach wieder aufgenommen.

Zielsystem:

Der Roboter ist gemäß einem Aspekt der vorliegenden Erfindung immer ,angeschaltet', obwohl es natürlich über einen Ausschalter verfügen kann. Es führt daher immer eine Tätigkeit aus. Allerdings gehört auch das Nichtstun (aufladen) oder in einem Ruhezustand den eigenen Langzeitspeicher der Handlungsoptionen optimieren (schlafen) dazu. Als Handlung wird immer diejenige gewählt, die aktuell den höchsten Motivationswert hat. Erreicht eine aktuell nicht ausgeführte Handlung einen höheren Motivationswert als die aktuell ausgeführte, wird diese abgebrochen, beendet oder unterbrochen, damit die mit der höchsten Motivation ausgeführt werden kann. Wenn die Motivation eines derartigen Autos auf dem Weg von München nach Hamburg zu tanken oder die Akkus aufzuladen größer wird als das Erreichen von Hamburg, wird es bei nächster Gelegenheit die Fahrt unterbrechen und eine Tankstelle ansteuern.

In der juvenilen Phase (s.u.), also in der Lernphase, eines derartigen Roboters bzw. Autos werden die Motivationen das Fahren, das Bremsen, das Beschleunigen und das Kurvenfahren auf kurzen Strecken hohe Motivationswerte erhalten, ganz einfach, weil der interne Langzeitspeicher signalisiert, es soll gelernt bzw. der Handlungsfehler reduziert werden, um das eigene Handeln zu präzisieren. Später, in der adulten Phase (s.u.), wenn solches Verhalten keine oder nur noch unwesentliche Veränderungen im Datenspeicher verursacht, die Fehlerreduktion nähert sich der Null, wird ein solches Verhalten 'langweilig', es erhält nur geringen Motivationswerte und dann wird zum Beispiel das Energiesparen bevorzugt.

Damit vermeidet dieses Zielsystem gemäß einem Aspekt der vorliegenden Erfindung eine Festlegung auf die Wirklichkeit, welches ja eine Interpretation derselben bedeuten würde, die möglicherweise in der Zukunft sich als falsch erweisen könnte.

Das zentrale Template, das Ego:

Das zentrale Template stellt den Kern und die Basis dieser KI gemäß einem Aspekt der vorliegenden Erfindung dar. Es wird Ego genannt, weil es sich selbst in das Zentrum seiner Datenverarbeitung stellt und erst einmal alles aus der eigenen Sicht betrachtet und bewertet. Daher müssen dem Ego keine Daten mit deren Bedeutung (zum Beispiel Identifikation von Bildern) vorgegeben oder antrainiert werden, es erschafft sich alles selbst.

Subjektives Polarkoordinatensystem:

Alle Daten der Beobachtungen und der Erfahrungen dieser KI sind subjektiv bzw. werden gemäß einem Aspekt der vorliegenden Erfindung aus der Perspektive des Egos gemacht. Dieser Idee folgt auch das Raumkonzept. Es wird kein kartesisches Koordinatensystem mit einem irgendwo angenommenen Ursprung der beobachteten Umgebung entworfen, in dem jedem erkannten Objekt die jeweiligen Koordinaten zugewiesen werden. Stattdessen kann ein Polarkoordinatensystem verwendet. Dadurch wird nicht nur der mathematische Ursprung automatisch im Ego festgelegt, sondern auch die subjektive Orientierung des Egos mit vorne-hinten, oben-unten, rechts-links einschließlich des Bewegungsvektors. Der umgebende (leere) Raum wird als gegeben vorausgesetzt. Die beobachteten Objekte werden nur über den Abstand zum eigenen Standpunkt, also dem Ursprung des Polarkoordinatensystems, und dem Winkel erfasst. Der leere Raum im physikalischen Sinn wird also nicht als eine eigene Entität oder Dimension angenommen. Er ist da und ist einfach nur eine Option sich dorthin zu bewegen, es sei denn, dort ist, steht oder bewegt sich ein anderes Objekt (hin), dann wäre der 'Platz' besetzt bzw. der Raum nicht leer. Ein weiterer Vorteil der subjektivistischen Polarkoordinaten ergibt sich im Folgenden für das Konzept der Alter Egos (s.u.).

Juvenile Phase:

Innerhalb unbedingter Vorgaben, wie die Unversehrtheit der beobachteten Objekte und des Roboters selbst, der Erhaltung der Einsatzbereitschaft (Ladezustand der Batterien), Zielsetzungen wie sanftes Beschleunigen und Bremsen und optimierte Kurvenfahrten und anderen, soll/kann der Roboter den Einsatz seiner Effektoren und die damit hervorgerufenen Konsequenzen selbst erlernen vor allem, um seine Effektoren mit seiner internen und externen Sensorik zu koordinieren und durch das steige Training 100-105, zeitweise unterbrochen von Ruhephasen, um zum Beispiel die Batterien aufzuladen, und die interne Datenbasis zu pflegen (Redundanz, Konsistenz,..), zu präzisieren, bis der erkannte Fehler aus Planung und Ergebnis ausreichend kein geworden ist. Bei einem Auto wären das vor allem der Einsatz von Gas geben, Lenken, Bremsen, einen Zielpunkt erreichen (Erfolg) oder verfehlen (Fehler) etc. Zuerst setzt das Ego sich selbst einfache Ziele für einfache Handlungen, die ausgeführt und mit Ergebnis abgespeichert werden, die später dann zu immer komplizierteren ,Choreografien' zusammengesetzt werden. Diese Ausbildungsphase kommt zum Ende, wenn die Handlungen der selbst- oder fremdgesetzten Ziele ("fahr mal dahin") nicht weiter optimiert werden können, also, wenn das mathematische Modul den Fehler nicht oder nur marginal noch verringern kann und/oder die Datenbasis kaum noch optimiert (Anzahl und Lage der Punkte in der Erinnerung) werden kann. Wenn sich die Fehlerreduktion immer langsamer verringert, neigt sich die juvenile Phase immer mehr ihrem Ende zu. Ein KNN hingegen benötigt gezielt ausgewählte Trainingsdaten in hohen Umfang, das Ego hingegen nur eine reale Umgebung, man könnte sagen ein Spielzimmer, wo es keine Schäden anrichten könnte, um die eigenen Fähigkeiten auszuprobieren und auszubilden. Es folgt intrinsischen Zielen und nicht extern vorgegebenen wie ein KNN und damit keiner Interpretation der Umgebung oder Welt.

Adulte Phase:

In der juvenilen Phase hat die Vorrichtung die geordnete Abfolge seiner Effektoreneinsätze für das Erreichen der gesetzten Ziele erlernt. Welchen Wert haben die in der juvenilen Phase gewonnene Erkenntnisse und Erfahrungen? Alle Daten über die Welt, die das Ego in der Welt, in der es sich bewegt, kennengelernt hat, sind eigene Daten, eigene Beobachtungen und eigene Erfahrungen. In einem übergeordneten wissenschaftstheoretischen oder philosophischen Sinne muss man feststellen, diese Daten sind aus der Sichtweise des Egos wahr, im Sinne eines Das-Ist-So oder Das-War-So. Damit stellt dies eine natürliche und feste Ausgangsbasis der Erkenntnis dar. Natürlich muss das Ego seine internen Daten pflegen. Neben einer oben bereits angedeuteten Optimierung auch dahingehend, dass sie widerspruchs- und fehlerfrei sind. Andernfalls könnte man als Hersteller oder Betreiber des Roboters nicht davon ausgehen, dass der Roboter mit seinen entworfenen Handlungen auch die angestrebten Ziele erreichen wird.
Den selbst erfahrenen und selbst verursachte Veränderungen in der Umgebung, wie zum Beispiel ein Ortswechsel durch Gas geben, lenken und bremsen, wird durch das Verbinden der internen und externen Daten erlebt und gespeichert. Es gibt, und es braucht dazu keine weiter hinter die eigenen Effektoren gehende Ursachenkenntnis im Sinne von Fragen wie, warum führt das getretene Gaspedal zu einer Beschleunigung, das Lenken zu einer Kurvenfahrt, das Bremsen zu einer negativen Beschleunigung. Dem Ego eines Autos reicht ein Es-gibt-die-drei-Optionen, um gezielt den Ort zu wechseln. Auf dieser Ebene ist das So-Ist-Es das Wichtige, nicht das Warum. Eine Taube auf der Straße hat sicher keine Ahnung, wie ein Auto oder ein Radfahrer funktioniert. Wenn aber so ein ,Verkehrsteilnehmer' weit genug an ihr vorbeifahren würde, bleibt sie sitzen, wird aber die Bewegungsrichtung in ihre Richtung geändert, fliegt sie davon. Sie weiß zwar nicht, warum, aber sie weiß um die Verhaltensmöglichkeiten und passt daher genau auf.

Alter Ego:

Wenn das (adulte) Ego über die externe Sensorik in der beobachtbaren Umgebung ein Objekt erkennt, erstellt das Ego einfach eine Kopie seiner selbst und passt die Parameter des der Kopie gemäß den beobachteten Eigenschaften an. Das Ego ist somit das Zentrale Template für alle beobachtbaren und nicht beobachtbaren Objekte und Phänomene. Daher auch die Namen Ego und, als Konsequenz, Alter Ego für die Kopien.
Durch die Verwendung des Egos als zentrales Template gibt es keine unbekannten Objekte mehr. Es gibt nur unbekannte Parameter, die aber über die externe Sensorik gemessen, aus der eigenen Erfahrung abgeschätzt (Stichwort Vorurteil) und deren mögliche Bandbreite durch weitere Beobachtungen eingeschränkt werden können.
So wie das Ego sein Verhalten mit seinen Methoden, gespeicherten Daten und Parametern berechnet und die eigene Situation prognostizieren kann, kann auch das Verhalten der Alter Egos mit denselben Methoden, Daten und den adaptierten Parametern berechnet werden. Die damit den Alter Egos unterstellte Annahmen beschränken sich auf dieselben physikalischen Gesetze und darauf, dass die kurzfristigen Ziele aus der beobachteten Orientierung und Bewegungsrichtung ableitbar sind. Sei das Beobachtete nun eine Kiste auf der Straße, ein Känguru in Australien oder eine alte Dame mit Rollator.
Programmtechnisch sollte das Ego als Objekt vorliegen. Dann kann davon für ein neu aufgetretenes Objektes ganz einfach eine Kopie des Egos erstellt werden, um danach die Parameter der Kopie des neuen Objektes mit Hilfe der externen Sensorik und der eigenen Erfahrung anzupassen. Es könnte eine Liste mit den Alter Egos der augenblicklichen Situation geben, in die die neue Kopie eingehängt oder erstellt wird:

```
Class CEgo { ... };
CEgo Ego( ... );
// Beginn von Ausbildung & Lernen, juvenile Phase
// Beginn der adulten Phase
CEgo AlterEgos[];
// neues Objekt erkannt
AlterEgos[i] = Ego.clone(); // Klonen des Egos für das Objekt
AlterEgos[i].adjust(...); // Parameteranpassung des neuen Objektes
```

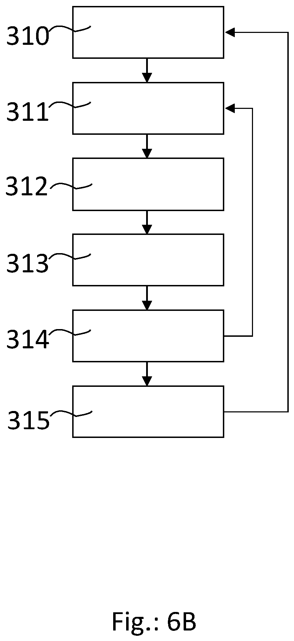

Damit hat das Ego intern ein Alter Ego als berechenbares Abbild eines beobachteten Objektes in der Umgebung erstellt und es kann, wie in Figur 6B gezeigt, zur kontinuierlichen Fortschreibung der beobachteten Situation die innere Schleife bilden aus Objekterkennung 311, Aktualisierung der beobachtbaren Objektparameter 312, Prognose des Verhaltens der Objekte 313, Anpassen der Abfolge der Effektoreneinsätze 314 und eine zweite, äußere Schleife nach dem Erreichen des Zieles und dem Eintritt in ein Ruhe- und (auch) Ladephase 315, bis es mit der Initialisierung 310 für ein neues Ziel weitergeht.

Es spielt dabei keine Rolle, ob das beobachtete Objekt bekannt oder ganz neu ist. Wenn es neu ist, ist die Bandbreite der möglichen Merkmalsausprägungen größer, was eine erhöhte Aufmerksamkeit (Abtastfrequenz) bedingt. Dies hat folgende Vorteile:

- Jedes beobachtete Objekt ist vom Grunde her bekannt!
- Verhaltensprognose aller externen Objekte mit eigenen Methoden und Daten!
- Der Mensch muss nicht mehr eingreifen, um Fehlendes einzuprogrammieren.
- Das Ego lernt und verbessert laufend sein Verhalten.
- Das Ego ist empathiefähig und ist sich der aktuellen Situation bewusst (s.u.).
- Das Ego kann aus der Beobachtung der Alter Egos lernen (s.u.).
- Alter Egos können unbekannte Kausalitäten und Regeln verkörpern (s.u.).

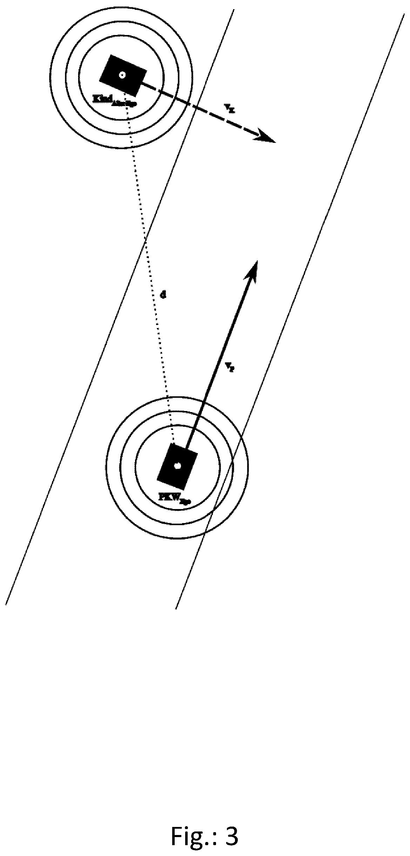

Figur 3 zeigt Szenario 1 "ein Kind" gemäß einem Aspekt der vorliegenden Erfindung.

Wenn das Ego, zum Beispiel die KI eines einfachen Autos, einem anderen Verkehrsteilnehmer, im Beispiel hier ein Kind, begegnet, erstellt es eine Kopie seiner selbst und passt die Parameter (Entfernung d zum Ego, Orientierung, Geschwindigkeit vK, ...) an:

So kann das Alter Ego mit den Methoden des Egos prognostizieren, wo es sich wann befinden wird. Und so kann das Ego über den Vergleich mit der eigenen Berechnung, wann es sich wo befinden wird, feststellen, ob es zu einer möglicherweise gefährlichen Situation kommen könnte, um entsprechen zu reagieren, also zu bremsen. So kann mit den eigenen Methoden und Erfahrungen das kurzfristige Verhalten des Kindes prognostiziert werden. NICHTS muss extra für das Kind programmierte oder trainiert werden, das dann nicht vorläge, wenn diese KI einem Kind das erste Mal begegnet.

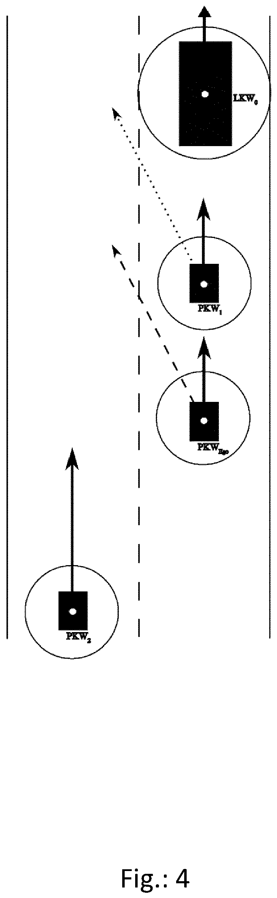

Figur 4 zeigt Szenario 2 "Autobahn" gemäß einem Aspekt der vorliegenden Erfindung.

Ein anderes Beispiel, das deutlicher zeigt, wie mächtig diese so einfach Idee der Alter Egos ist, ist eine Situation auf einer Autobahn mit einem LKW und zwei PKW dahinter und einem PKW auf der Überholspur, von denen der zweite PKWEgo unser Ego ist. Das Ego kann zunächst einmal aufgrund der eigenen Kenntnis vom Kraftgesetz (F=m*a) von Bremsstärke, Masse mit den Parametern der beobachteten PKWs und des LKWs, also mit vermuteter Masse, gemessener Geschwindigkeit und vermuteter Bremswirkung allein mit den eigenen Methoden die Bremswege aller Verkehrsteilnehmer in einer möglichen Unfallsituation prognostizieren, um so den eigenen Sicherheitsabstand zu bestimmen. Behandeln wir aber zunächst die 'Gedanken' bzw. die Unterstellungen des Egos über die anderen Verkehrsteilnehmer für die Prognose ihrer Handlungen:

- Der LKW0 fährt eine bestimmte Geschwindigkeit, über den das Ego (PKWEgo) gelernt hat (ohne speziell darauf trainiert werden zu müssen), dass derart große Verkehrsteilnehmer sie nur ganz selten überschreiten. Das Alter Ego des LKWs wird also keine Geschwindigkeitsveränderung prognostizieren.

- Der PKWEgo, das Zentrum der Betrachtung, wäre in der Lage schneller zu fahren und würde den LKW0 unter Berücksichtigung der anderen Verkehrsteilnehmer überholen. Das Überholen würde den PKWEgo schneller an sein Ziel bringen und erhält damit einen im Moment höheren Motivationswert, er bereitet den Überholvorgang vor.

- Der PKW1, ein weiteres Alter Ego, denkt systembedingt dasselbe wie der PWKEgo, weil das Ego an seiner Stelle so handeln würde. Das Ego unterstellt also dem PKW1, LKW0 auch überholen zu wollen. Natürlich 'sieht' das Alter Ego des PKW1 PKWEgo und wird seinen (vom Ego) unterstellten Überholvorgang unter Berücksichtigung der Existenz des PKWEgo durchführen, also zum Beispiel Blinker setzen und unter besonderer Aufmerksamkeit auf den PKWEgo und möglicher weiterer Verkehrsteilnehmer auf der Überholspur zu lenken. Das wäre das, was das Ego des PKWEgo 'denkt' und wie es das Verhalten des PKW1 prognostizieren würde.

- Ein möglicher weiterer Verkehrsteilnehmer, der PKW2, nähert sich auf der Überholspur mit hoher Geschwindigkeit. Auch dafür erstellt das Ego ein Alter Ego, entwirft dessen Handlungsprognose aufgrund der freien Fahrbahn.

- Wie oben dargestellt, kann das Programm, das Ego, die gesamte Situation mit allen relevanten Verkehrsteilnehmern prognostizieren und sie eigene Abfolge der Effektoreneinsätze entsprechend planen, sodass es zu keiner gefährlichen Entwicklung kommt.

Alter Ego, Bewusstsein:

Somit hat das Ego intern ein vollständiges Bild der beobachtbaren Umgebung mit allen erkannten Objekten und die Fähigkeit, kurzfristig deren Verhalten zu prognostizieren. Das wäre eine mögliche und programmtechnische umsetzbare Definition von Bewusstsein, einem echten, kein vorgetäuschtes oder imitiertes.

Die kurzfristige Verhaltensprognose aufgrund der Fähigkeit, sich an die Stelle der beobachteten Objekte zu versetzen, heißt hier, die Situation mit allen für die Alter Egos umgerechneten Daten betrachten, und über das berechnete wahrscheinliche Verhalten der beobachteten Objekte, die Entwicklung der Situation zu berechnen.

Das Ego in der Autobahn-Situation oben kann für alle beobachteten Objekte, ohne dass dafür extra Routinen programmiert werden müssen:

- deren Verhalten prognostizieren mit der unterstellten Bedingung, alle Verkehrsteilnehmer wollen so schnell wie möglich und ohne Unfall vorankommen,
- laufend die Prognosen mit dem beobachteten tatsächlichen Verhalten (bremsen, beschleunigen, lenken, Blinker setzen, Lichthupe betätigen etc.) anpassen und
- selbst in einem geeigneten Moment den LKW zu überholen.

Das mögliche Verhalten aller Beteiligten in dieser Situation ist durch das Ego ohne Probleme abzuschätzen, in dem es die eigenen Methoden und Erfahrungen (Daten) mit den jeweils angepassten Parametern auf sie anwendet. Macht der Mensch das nicht genauso?

Die Beispiele machen klar, die Basis, die Grundlage und der Ausgangspunkt dieser KI ist immer das Ego, das Zentrale Template. Je differenzierter seine Möglichkeiten bei der internen und der externen Sensorik und je besser die Ausbildung in der juvenilen Phase, desto intelligenter sein Verhalten und desto größer sein Potential, das Verhalten beobachteter Objekte zu prognostizieren. Wenn man dem Ego auch einen Parameter für die eigene Verwundbarkeit, bei einem Auto würde man da wohl eher von Verformbarkeit sprechen, könnte das Ego auch die Risiken eines starken oder schwachen Kontaktes abschätzen. ABER, es muss immer NUR (einmal) das Ego gebaut, programmiert und ausgebildet werden, wobei er letzte Teil natürlich auch von einem ausgebildeten Ego übertragen werden kann. Beobachtete Objekte müssen weder identifiziert (KNNs und ihre Trainingsdaten), noch muss das Verhalten der identifizierten Objekte programmiert werden. Man könnte natürlich einwenden, das Ego reicht nicht aus, das Verhalten anderer Verkehrsteilnehmer zu prognostizieren. Aber da muss man sich nur überlegen, wie der Mensch das Verhalten anderer Verkehrsteilnehmer versucht abzuschätzen. Auch der Mensch kennt nicht die Fernziele der Verkehrsteilnehmer auf einer Autobahn, auch er kann nur die kurzfristigen Ziele der anderen Verkehrsteilnehmer (so schnell wie möglich unfallfrei vorankommen) erahnen und sich darauf vorbereiten.

Die Fähigkeiten des Roboters:

Empathie:

Oben wurde gezeigt, wie sich das Ego mit Hilfe der Alter Egos in die Situationen der beobachteten Objekte seiner Umgebung versetzen kann, um deren Verhalten aus deren Sicht zu berechnen. Man kann es Empathie nennen, wenn man den Begriff nicht ausschließlich für den Menschen reserviert.

Lernen aus der Beobachtung:

Lernen aus Beobachtung bedeutet, man beobachtet ein Verhalten, das im Vergleich zum eigenen möglicherweise besser ist und übernimmt es in dem Fall und falls möglich. Die Basis ist der Vergleich zwischen fremdem und eigenem Verhalten und dieser Vergleich wird ermöglicht durch die oben definierte Empathie.

Empathie des Egos wird hier über Alter Egos realisiert, über die das Ego sich in die Situation anderer beobachteter Objekte versetzt, um aus deren Sicht auf die Umgebung deren Verhalten zu prognostizieren. Angenommen, es ergibt sich jetzt eine Differenz zwischen prognostiziertem und beobachtetem Verhalten. Und wenn jetzt das Alter Ego die Einsatzfolge der Effektoren so verändert, dass das beobachtete Verhalten nachgebildet wird, hat das Ego die Möglichkeit das beobachtete Verhalten zu kopieren, wenn es denn einen Vorteil bietet.

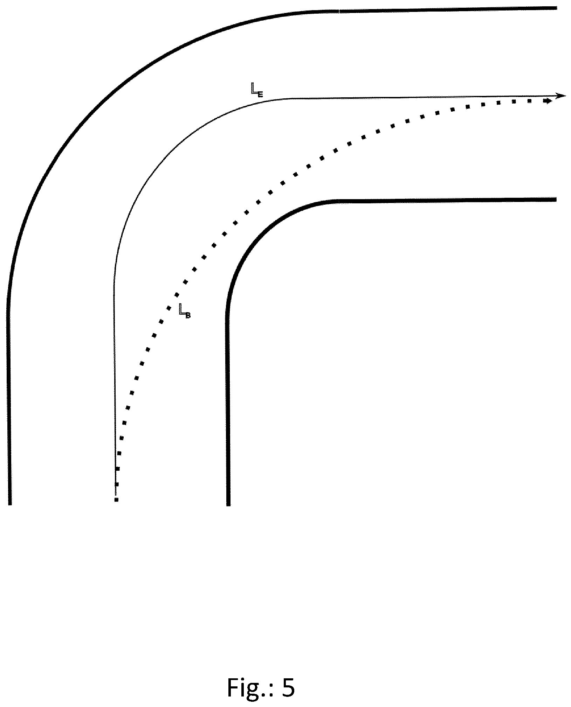

Figur 5 zeigt Szenario 3 unterschiedliches "Kurvenverhalten".

Stellen wir uns vor das Ego hat gelernt, eine Kurve immer mit dem gleichen Abstand zum rechten Fahrbahnrand zu fahren, die Linie LE. Nun beobachtet es ein vorausfahrendes Auto, das die Kurve abschneidet, indem es früher aber weniger stark einlenkt, wodurch sich auch die Seitbeschleunigung verringert und somit schneller um die Kurve fährt, auf der gepunkteten Kurve LB.

So gesehen ist die hier beschriebene Empathie Voraussetzung für das Lernen aus der Beobachtung und dem Nachmachen des Verhaltens anderer. (Was spricht dagegen, ähnliches auch für den Menschen zu vermuten, also Lernen durch Imitation auf Basis der Empathie.)

Wenn nun die Daten der externen Sensorik, umgerechnet auf die Situation und Position des Alter Egos, so mit den gespeicherten, einfachen und komplexeren Handlungsabfolgen des Egos verknüpft werden, die ja in das Alter Ego kopiert wurden, ist das Ego in der Lage aus der Beobachtung zu lernen: Es kann die Differenz der selbst geplanten Handlungsfolge der eigenen Effektoren (immer gleicher Abstand zum Fahrbahnrand) zur beobachteten (früheres bremsen und einlenken, kleinere Lenkbewegung und höhere Kurvengeschwindigkeit und früheres beschleunigen) erkennen und feststellen, dass es so schneller durch die Kurven fahren könnte. Diese Form des Lernens ist sicher schneller als das übliche Versuch-und-Irrtum.

Erkennen von Kausalgesetzen:

Im Abschnitt Theoriebildung wurde erläutert, wie jeder beobachtete, funktionale Zusammenhang nachgebildet werden kann. Verwenden wir diese Fähigkeit für das Erkennen von Naturgesetzen, wofür auch, falls nötig und geeignet, Alter Egos verwendet werden. Natürlich liegen oder fahren die nicht auf einer Straße, aber sie bewirken Veränderungen, die von einer externen und/oder internen Sensorik erfasst werden können.

Stellen wir uns ein Experiment vor, bei dem unser KI-Ego einen fallenden Apfel beobachtet. Es erstellt ein Alter Ego und bemerkt die beschleunigte Bewegung Richtung Erde. Nun wird die erste Unterstellung des Egos sein, der Apfel hat selbst die Beschleunigung verursacht, es verfügt wie das Auto-Ego über ein eigenes 'Gaspedal', um sich zu beschleunigen. Dann wird das Ego aber beobachten, dass sich kein Apfel auf dem Boden selbst bewegt und dass andere Dinge ebenfalls zur Erde fallen und sich dann dort nicht weiterbewegen. Außerdem dürfte das Ego selbst das Gravitationsgesetz kennengelernt haben. Auf einer abschüssigen Straße würde es, ohne das Gaspedal zu betätigen, eine Beschleunigung bemerkt und gelernt haben, aber immer nur ‚bergab', während es 'bergauf' mehr Gas geben muss. Je steiler der Winkel $\alpha$, desto größer der die Kraft gemäß dieser uns bekannten Formel (mit g=Erdbeschleunigung, 9,81 m/sec2):

$$F = m * g * \sin(\alpha) \qquad\qquad (2)$$

Wir erinnern uns, das Ego kennt natürlich nicht explizit diese Gleichung oder die Gleichung für den freien Fall, also das Gravitationsgesetz ($\sin(\alpha=90°) = 1$), aber über die Datenpunkte und der stückweisen Linearen Inter- oder Extrapolation hat es eine implizite Kenntnis über diesen Zusammenhang der relevanten Größen.

Das Ego verhält sich also so, als ob es wüsste, dass es, wie ein Physiker sagen würde, als Körper mit schwerer Masse der Massenanziehung dem obigen Gesetz unterworfen ist. Wenn es nun ein anderes Objekt sieht und dessen Alter Ego erstellt, ist auch das Alter Ego dieser Massenanziehung unterworfen. Auf diese Weise erhält diese Erkenntnis quasi den Status eines Naturgesetzes, das auf alle Körper wirkt, ohne dass es extra einprogrammiert werden muss. Wenn das Verhalten eines solchen Egos von außen betrachtet werden würde, könnte man nicht sagen, ob es das Gravitationsgesetz tatsächlich kennt, wie es ein Physiker tut, oder ob es diese Einsicht nur vortäuscht. Selbst, wenn das Ego eine Taube auf der Straße sitzen sieht, die wegfliegt, sobald sich das Ego nähert, kann es erkennen, dass Flügelschlag und Aufwärtsbeschleunigung korrespondieren.

Ein anderes Beispiel wäre ein starker Seitenwind. Das Ego sei ein großer leerer Kastenwagen. Bei einer normalen Geradeausfahrt ist die Seitbeschleunigung gleich Null. Dann aber wird der Kastenwagen während der Geradeausfahrt plötzlich seitversetzt und der Sensor für die Seitbeschleunigung schlägt an. In diesem Fall kann das Ego für die unerwartete Kraft und die unbekannte Ursache, einfach ein neues Alter Ego erstellen und das mit dieser Seitbeschleunigung verknüpfen. Wenn das Ego dann auch noch die Daten der Umgebung, wie im Wald oder der Ebene, oder die Bewegung von Ästen erfassen und dem Datenspeicher zufügen kann, hat das Ego nicht nur eine bisher unbekannte Größe (Seitenwind) erkannt, es hat auch einen möglichen ursächlichen Zusammenhang erkannt. Wenn das Ego auch noch das Ausmaß der Bewegungen der Äste sehen und beurteilen könnte, könnte es sogar die Stärke der auf die Seite wirkenden Kraft in etwa abschätzen und so den wahrscheinlichen Einfluss auf des Fahrverhaltens. Das Ego hat auf diese Weise selbst eine Theorie mit einer neuen Variablen erstellt. Ähnlich den Physikern, die Dunkle Materie und Dunkle Energie, wiewohl nicht sicht- und beobachtbar, einführten, oder wie der Nobelpreisträger Peter Higgs, der in den 1960er Jahren ein Teilchen konzipierte, das dann 2012 im Cern erstmalig nachgewiesen wurde. Das Alter Ego, also der Kopie des Selbst, kann mit diesem Vorgehen im Sinne einer Wahrheitssuche natürlich niemals die wahre Natur eines Phänomens erkennen, aber es reicht für das kompetente Erfassen der Situation.

Selbstbewertung:

Die erste Form des Erkenntnisgewinns wurde bereits beschrieben. Im Abschnitt über das "Erkennen von Kausalgesetzen" wurde das Beispiel des Seitenwindes entwickelt. Eine dem Ego (zunächst) unbekannte Kraft erzeugt plötzlich auf gerader Strecke eine Seitbeschleunigung, eine messbare Wirkung auf den Roboter bzw. dem Ego. Dafür erstellt es ein Alter Ego. Allerdings fehlen zunächst weitere Informationen, die dem Ego signalisieren, wann das Phänomen mit welcher Stärke auftritt. Erst mit der Beobachtung des Egos über einen zeitlichen Zusammenhang von den Bewegungen der Ästen, mal stärker und mal schwächer, und der eigenen Seitbeschleunigung, mal keine und mal doch, kann das Ego beides verbinden und für beides dieselbe Ursache vermuten. Was passiert hier? Das Ego kann den Seitenwind selbst nicht erkennen, aber die eigene Reaktion darauf (Seitbeschleunigung) und die Reaktion der Äste. Damit erzeugt es ein Element, das mal eine Auswirkung auf das Ego hat und mal nicht, das aber nicht nur Auswirkungen auf das Ego hat, sondern auf andere beobachtbare Objekte auch.

Die zweite Form der Erkenntnisgewinnung basiert auf dem Vergleich des eigenen Verhaltens mit dem von anderen Objekten. Voraussetzung ist die Annahme, dass das Verhalten der beobachteten Objekte 'rational' und nicht randomisiert ist, obwohl auch das als solches erkannt werden könnte, wodurch dann der Vergleich für einen möglichen Erkenntniszugewinn keine Maßgabe mehr wäre. Es werden zwei unterschiedliche Verhaltensvergleiche durchgeführt, wodurch das Ego feststellen kann, ob die eigene Kompetenz (s.u.) in einer Situation denen der beobachteten Objekte unterlegen, gleichwertig oder überlegen ist. Das heißt, dass die beobachteten Objekte mehr, gleichviel oder weniger von der Situation wahrnehmen können. Ein beobachteter Kastenwagen verringert plötzlich auf einer geraden Straße die Geschwindigkeit. Er scheint etwas zu sehen, das dem beobachtenden Ego unbekannt ist, es erkennt weniger als das Objekt. Wurde eine unterlegene Kompetenz festgestellt, kann das als Anlass verstanden werden, diese Situationen gezielt zu untersuchen, um die eigene Kompetenz zumindest auf das Niveau der anderen zu heben. Verglichen wird nicht, ob das Verhalten richtig oder falsch ist, das würde nur zu den bekannten Problemen der Wahrheitstheorien führen, sondern nur, ob und wann ein Verhalten sich ändert und ob sich Verhaltensweisen wiederholen. Der erste Verhaltensvergleich betrifft unterschiedliche Situationen: Zeigen die beobachteten Objekte in für das Ego unterschiedliche Situationen auch unterschiedliche Verhaltensweisen? Der zweite Vergleich betrifft gleiche Situationen: Wiederholt sich das Verhalten der beobachteten Objekte in für das Ego gleichen Situationen oder variiert es? Aus diesen Beobachtungen von mehreren Situationen über einen längeren Zeitraum kann das Ego schließen,

- dass die eigene Kompetenz unterlegen ist, wenn wiederholt in für das Ego gleichen Situationen beobachtete Objekte unterschiedliche Verhalten zeigen und in für das Ego unterschiedlichen Situationen auch ihr Verhalten variieren,

- dass die eigene Kompetenz überlegen ist, wenn wiederholt in für das Ego gleichen Situationen beobachtete Objekte ihr Verhalten wiederholen aber auch in für das Ego unterschiedlichen Situationen ihr Verhalten nicht variieren,

- dass die eigene Kompetenz äquivalent ist, wenn wiederholt in für das Ego gleichen Situationen beobachtete Objekte ihr Verhalten wiederholen aber in für das Ego unterschiedlichen Situationen ihr Verhalten variieren.

Mit diesem einfachen Vergleichen kann das Ego erkennen, wie groß die eigene Kompetenz in bestimmten Situationen im Vergleich zu anderen Objekten ist. Wohlgemerkt, dies ist kein Vergleichsversuch mit der "Wahrheit der Realwelt".

Aus diesen Vergleichen kann das Ego sich selbst bewerten und zum Beispiel ableiten, ob es sich in bestimmten Situationen vorsichtiger verhalten sollte und versuchen sollte das (noch) nicht Erkennbare zu identifizieren. Es kann als ein interner Auftrag verstanden werden, gezielt zu forschen als Teil des "stetigen Lernens und der fortgesetzte, Vergrößerung der Erkenntnis und des Wissens" (s.o.).

Kompetenz:

Aus dem Ergebnis dieser Vergleiche lässt sich aber auch extern die Kompetenz der Fähigkeiten des Roboters beurteilen, um über seine Einsatzmöglichkeiten zu entscheiden. Im Gegensatz zur Wahrheit des Wissens über die Realwelt, dass das Ego sich erarbeitet hat, gibt es bei der Kompetenz keine sprachlichen Probleme, Kompetenzen zu vergleichen und bei der Feststellung von größerer oder kleinerer Kompetenz.

Der Begriff der Wahrheit in Bezug auf Theorien hat aber noch einen wichtigen Aspekt, den Kompetenz ebenfalls erfüllen muss. Theorien ermöglichen Prognosen. Daher ist es wichtig zu wissen, welche Qualität eine Theorie und in der Folge ihre Prognosen haben. Allgemein dient die Zuschreibung von Wahrheit zu einer Theorie als Kriterium, sie anwenden zu können, anwenden zu dürfen, mit dem Vorteil, dass das Kriterium Wahrheit alle konkurrierenden Theorien automatisch ausschließt und sich so ein Entscheidungsproblem, welche Theorie zu verwenden wäre, nicht stellt. Der Begriff der Kompetenz muss Vergleichbares leisten.

Kompetenz wird hier definiert und verwendet als das Erfassen der relevanten Einflussfaktoren einer Situation oder gleicher Situationen. Damit ist sie zunächst einmal ein beschränktes Kriterium, dessen Höhe aber in einem Vergleichsverfahren ermittelt werden kann, ganz im Gegensatz zur Wahrheit einer Theorie, die eine zeitlich und räumlich unbeschränkte Gültigkeit unterstellt. Dies kann aber weder bewiesen werden noch erlaubt das Kriterium, unterschiedliche Theorien miteinander vergleichen.

Damit ist Kompetenz zur Leistungsbeschreibung der Fähigkeiten eines Roboters besser geeignet als der Begriff der Wahrheit und er kann, auch anders als Wahrheit, zur Selbstbewertung von dem Roboter in einem formalen Verfahren selbst ermittelt werden.

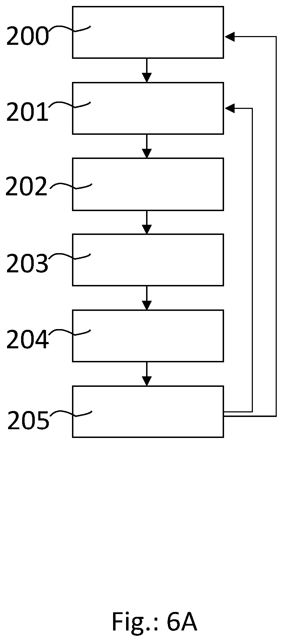

Figur 6A zeigt in einem schematischen Ablaufdiagramm ein Verfahren zum autonomen Ansteuern einer Vorrichtung in der juvenilen bzw. der Ausbildungsphase. Ziel und Ende der Phase ist die ausreichend präzise Verwendung und Einsatz der Effektoren, ein möglichst kleiner Fehler. Nach dem Initialisieren 200 kommt es zum randomisiertem Betätigen 201 von Effektoren und dem Auslesen 202 einer Vielzahl von internen Sensorikeinheiten eingerichtet zur Messung von internen Vorrichtungseigenschaften und einem Auslesen 203 von einer Vielzahl von externen Sensorikeinheiten eingerichtet zur Messung von externen Umgebungseigenschaften; ein Abspeichern 204 von Wechselbeziehungen, welche zwischen dem Betätigen 201 der Effektoren und den ausgelesenen Vorrichtungseigenschaften und Umgebungseigenschaften vorliegen als Handlungsanweisungen, derart, dass eine Handlungsanweisung ein Ausgangstripel von Betätigen 201, Vorrichtungseigenschaften und Umgebungseigenschaften in ein Zieltripel überführt ein Ansteuern 205 der Vorrichtung gemäß mindestens einer vordefinierten Zielvorrichtungseigenschaft und/ oder mindestens einer vordefinierten Zielumgebungseigenschaft unter Verwendung von mindestens einer abgespeicherten 204 Handlungsanweisung, welche angibt wie die mindestens eine vordefinierte Zielvorrichtungseigenschaft und/ oder die mindestens eine vordefinierte Zielumgebungseigenschaft anhand des Ausgangstripels und des Zieltripels eingestellt wird.

Figur 6A zeigt die Juvenile Phase:

200    Initialisierung als Vorbereitung zum Lernen

201    randomisiertes Betätigen der Effektoren

202    Auslesen 202 einer Vielzahl von internen Sensorikeinheiten

203    internen Vorrichtungseigenschaften und einem Auslesen 203 von einer Vielzahl von externen Sensorikeinheiten

204    Abspeichern 204 von Wechselbeziehungen

205    Feststellen des Fehlers der Bewegungspräzision, sofort, wenn zu groß weiter bei 201

Optional: Ruhephase zum Aufladen und ex Post zur Datenaufbereitung: Fehler, Redundanz, Konsistenz,...

Figur 6B zeigt die Adulte Phase:

310    Initialisierung als Vorbereitung ein längerfristiges Ziel zu erreichen
311    Erkennen der Objekte 311 in der aktuellen Situation
312    Erstellen oder aktualisieren der Alter Egos bzw. deren Parameter 312
313    Verhaltensprognose 313 der beobachteten Objekte mittels der aktuellen Alter Egos
314    Berechnung des optimalen Effektoreneinsatzes 314 zur weiteren eigenen Zielverfolgung
315    Ruhephase 315 zum Aufladen und der ex Post Datenaufbereitung: Fehler, Redundanz, Konsistenz,..

**Patentansprüche**

1.    Verfahren zum autonomen Ansteuern einer Vorrichtung, wobei das Verfahren die folgenden Schritte aufweist:

- Initialisieren (100) mittels randomisierten Betätigens (101) von Effektoren und Auslesen (102) einer Vielzahl von internen Sensorikeinheiten eingerichtet zur Messung von internen Vorrichtungseigenschaften als interne Zustände und einem Auslesen (103) von externen Umgebungseigenschaften als externe Zustände durch eine zur Messung eingerichtete Vielzahl von externen Sensorikeinheiten,

wobei anhand der externen Sensorikeinheiten ein Objekt erfasst wird und dessen erfasste Parameter mit Vorrichtungseigenschaften und Handlungsanweisungen der Vorrichtungen verglichen werden und die erfassten Parameter zur Prädiktion eines Verhaltens des erfassten Objekts verwendet werden,
wobei eine Handlungsanweisung als Abbildungsfunktion ein Ausgangstripel von Betätigen der Effektoren, Vorrichtungseigenschaften und Umgebungseigenschaften in ein Zieltripel überführt, das einen neuen internen Zustand, einen neuen externen Zustand sowie mögliche Handlungen spezifiziert, die in den neuen Zuständen möglich sind,

- Abspeichern (104) von Wechselbeziehungen, welche zwischen dem Betätigen (101) der Effektoren und den ausgelesenen Vorrichtungseigenschaften und Umgebungseigenschaften bestehen als Handlungsanweisungen; und
- Ansteuern (105) der Vorrichtung gemäß mindestens einer vordefinierten Zielvorrichtungseigenschaft und/ oder mindestens einer vordefinierten Zielumgebungseigenschaft unter Verwendung von mindestens einer abgespeicherten (104) Handlungsanweisung, welche angibt wie die mindestens eine vordefinierte Zielvorrichtungseigenschaft und/ oder die mindestens eine vordefinierte Zielumgebungseigenschaft anhand des Ausgangstripels und des Zieltripels eingestellt wird, wobei das Verfahren lernend iteriert wird, in dem stets neue Handlungsanweisungen erkannt werden, welche jeweils ein Ausgangstripel in ein Zieltripel überführen und diese Handlungsanweisungen zum Ansteuern der Vorrichtung gespeichert werden.

2. Verfahren nach Anspruch 1, **dadurch gekennzeichnet, dass** das Verfahren lernend iteriert wird, derart, dass stets neue Handlungsanweisungen erkannt werden, welche jeweils ein Ausgangstripel in ein Zieltripel überführen und diese Handlungsanweisungen zum Ansteuern (105) der Vorrichtung gespeichert werden.

3. Verfahren nach Anspruch 1 oder 2, **dadurch gekennzeichnet, dass** das Auslesen (102, 103) von internen und/ oder externen Effektoren derart erfolgt, dass einzelne Stützwerte abgespeichert werden und Zwischenwerte interpoliert und/ oder extrapoliert werden.

4. Verfahren nach einem der vorhergehenden Ansprüche, **dadurch gekennzeichnet, dass** die Zielvorrichtungseigenschaft und/ oder die Zielumgebungseigenschaft mindestens temporär von einer Vorrichtungseigenschaft und/ oder einer Umgebungseigenschaft beeinflusst wird.

5. Verfahren nach einem der vorhergehenden Ansprüche, **dadurch gekennzeichnet, dass** mehrere Handlungsanweisungen zu einer Choreografie kombiniert werden, welche ein Ausgangstripel in ein Zieltripel überführt.

6. Verfahren nach einem der vorhergehenden Ansprüche, **dadurch gekennzeichnet, dass** anhand von externen Sensorikeinheiten ein Objekt erfasst wird und dessen erfasste Parameter mit Vorrichtungseigenschaften und/ oder Handlungsanweisungen der Vorrichtungen verglichen werden.

7. Verfahren nach Anspruch 6, **dadurch gekennzeichnet, dass** die erfassten Parameter zur Prädiktion eines Verhaltens des erfassten Objekts verwendet werden.

8. Verfahren nach einem der Ansprüche 6 oder 7, **dadurch gekennzeichnet, dass** Wechselbeziehungen des erfassten Objekts zwischen dessen Parameter und dessen Handlungen zur Erstellung von Handlungsanweisungen der Vorrichtung verwendet werden.

9. Verfahren nach einem der vorhergehenden Ansprüche, **dadurch gekennzeichnet, dass** ein Effektor als ein Motor, ein Greifarm, eine Fortbewegungseinheit, ein Antrieb, ein Scheibenwischer, ein Blinker, eine Leuchte, eine Lenkung oder eine ausführende Einheit vorliegt.

10. Verfahren nach einem der vorhergehenden Ansprüche, **dadurch gekennzeichnet, dass** interne Sensorikeinheiten einen Effektorzustand, eine Effektoreinstellung, eine Effektorposition, eine Größe, ein Gewicht, eine Abmessung, eine Geschwindigkeit, eine Beschleunigung, ein Abbremsen, einen Batteriestand, eine Position, und/ oder einen weiteren Systemparameter der Vorrichtung erfassen.

**11.** Verfahren nach einem der vorhergehenden Ansprüche, **dadurch gekennzeichnet, dass** externe Sensorikeinheiten einen Abstand, ein Objekt, ein Lidarsignal, ein Bildsignal, eine Position, eine Größe, eine Abmessung, eine Akkustiksignal und/ oder einen weiteren externen Parameter erfassen.

**12.** Vorrichtung eingerichtet zum Ausführen eines Verfahrens nach einem der vorhergehenden Ansprüche, aufweisend:

- eine Initialisierungseinheit eingerichtet zum Initialisieren (100) mittels randomisierten Betätigens (101) von Effektoren und Auslesen (102) einer Vielzahl von internen Sensorikeinheiten eingerichtet zur Messung von internen Vorrichtungseigenschaften als interne Zustände und einem Auslesen (103) von externen Umgebungseigenschaften als externe Zustände durch eine zur Messung eingerichtete Vielzahl von externen Sensorikeinheiten,

wobei die Vorrichtung dazu ausgebildet ist, anhand der externen Sensorikeinheiten ein Objekt zu erfassen und dessen erfasste Parameter mit Vorrichtungseigenschaften und Handlungsanweisungen der Vorrichtungen zu vergleichen und die erfassten Parameter zur Prädiktion eines Verhaltens des erfassten Objekts zu verwenden,
wobei eine Handlungsanweisung als Abbildungsfunktion ein Ausgangstripel von Betätigen der Effektoren, Vorrichtungseigenschaften und Umgebungseigenschaften in ein Zieltripel überführt, das einen neuen internen Zustand, einen neuen externen Zustand sowie mögliche Handlungen spezifiziert, die in den neuen Zuständen möglich sind,

- eine Speichereinheit eingerichtet zum Abspeichern (104) von Wechselbeziehungen, welche zwischen dem Betätigen (101) der Effektoren und den ausgelesenen Vorrichtungseigenschaften und Umgebungseigenschaften bestehen als Handlungsanweisungen,
- wobei die Vorrichtung weiter dazu ausgebildet ist, gemäß mindestens einer vordefinierten Zielvorrichtungseigenschaft und/ oder mindestens einer vordefinierten Zielumgebungseigenschaft unter Verwendung von mindestens einer abgespeicherten Handlungsanweisung, welche angibt wie die mindestens eine vordefinierte Zielvorrichtungseigenschaft und/ oder die mindestens eine vordefinierte Zielumgebungseigenschaft anhand des Ausgangstripels und des Zieltripels eingestellt wird, angesteuert zu werden, und
- wobei die Vorrichtung weiter dazu ausgebildet ist, dass das Verfahren lernend iteriert wird, in dem stets neue Handlungsanweisungen erkannt werden, welche jeweils ein Ausgangstripel in ein Zieltripel überführen und diese Handlungsanweisungen zum Ansteuern der Vorrichtung gespeichert werden.

## Claims

**1.** A method for autonomously controlling a device, the method comprising the following steps:

- initialising (100) by means of randomised actuation (101) of effectors and reading (102) a plurality of internal sensor units set up to measure internal device properties as internal states and a reading (103) of external environmental properties as external states by a plurality of external sensor units set up for measurement,
- whereby an object is detected by means of the external sensor units and its detected parameters are compared with device properties and instructions for action of the devices and the detected parameters are used to predict the behaviour of the detected object,
- whereby an action instruction as a mapping function transfers an output triplet of actuation of the effectors, device properties and environmental properties into a target triplet that specifies a new internal state, a new external state and possible actions that are possible in the new states,
- storage (104) of interrelationships existing between the actuation (101) of the effectors and the read-out device properties and environmental properties as instructions for action; and
- controlling (105) the device according to at least one predefined target device property and/or at least one predefined target environment property using at least one memorised (104) action instruction, which indicates how the at least one predefined target device property and/or the at least one predefined target environment property is set using the output triplet and the target triplet, the method being iterated in a learning manner, in which new action instructions are constantly recognised, which in each case convert an output triplet into a target triplet and these action instructions are stored for controlling the device.

**2.** The method according to claim 1, **characterised in that** the method is iterated in a learning manner in such a way that new action instructions are always recognised, which in each case convert an output triplet into a target triplet and these action instructions are stored for actuating (105) the device.

3. The method according to claim 1 or 2, **characterised in that** the readout (102, 103) of internal and/or external effectors is carried out in such a way that individual support values are stored and intermediate values are interpolated and/or extrapolated.

4. The method according to one of the preceding claims, **characterised in that** the target device property and/or the target environment property is at least temporarily influenced by a device property and/or an environment property.

5. The method according to one of the preceding claims, **characterised in that** a plurality of action instructions are combined to form a choreography which converts an output triplet into a target triplet.

6. The method according to one of the preceding claims, **characterised in that** an object is detected by means of external sensor units and its detected parameters are compared with device properties and/or instructions for action of the devices.

7. The method according to claim 6, **characterised in that** the detected parameters are used to predict the behaviour of the detected object.

8. The method according to one of claims 6 or 7, **characterised in that** interrelationships of the detected object between its parameters and its actions are used to generate instructions for action of the device.

9. The method according to one of the preceding claims, **characterised in that** an effector is present as a motor, a gripper arm, a locomotion unit, a drive, a windscreen wiper, an indicator, a light, a steering or an executive unit.

10. The method according to one of the preceding claims, **characterised in that** internal sensor units detect an effector state, an effector setting, an effector position, a size, a weight, a dimension, a speed, an acceleration, a deceleration, a battery level, a position, and/or a further system parameter of the device.

11. The method according to one of the preceding claims, **characterised in that** external sensor units detect a distance, an object, a lidar signal, an image signal, a position, a size, a dimension, an acoustic signal and/or a further external parameter.

12. An apparatus adapted to carry out a method according to any one of the preceding claims, comprising:

- an initialisation unit set up for initialising (100) by means of randomised actuation (101) of effectors and reading out (102) a plurality of internal sensor units set up for measuring internal device properties as internal states and reading out (103) external environmental properties as external states by a plurality of external sensor units set up for measurement,
- wherein the device is designed to detect an object by means of the external sensor units and to compare its detected parameters with device properties and instructions for action of the devices and to use the detected parameters to predict the behaviour of the detected object,
- whereby an action instruction as a mapping function transfers an output triplet of actuation of the effectors, device properties and environmental properties into a target triplet that specifies a new internal state, a new external state and possible actions that are possible in the new states,
- a memory unit set up for storing (104) correlations which exist between the actuation (101) of the effectors and the read-out device properties and environmental properties as instructions for action,
- wherein the device is further adapted to be controlled according to at least one predefined target device property and/or at least one predefined target environment property using at least one stored action instruction indicating how to set the at least one predefined target device property and/or the at least one predefined target environment property using the output triplet and the target triplet, and
- wherein the device is further designed so that the method is iterated in a learning manner, in which new action instructions are constantly recognised, each of which converts an output triplet into a target triplet and these action instructions are stored for controlling the device.

**Revendications**

1. Procédé de commande autonome d'un dispositif, le procédé comprenant les étapes suivantes :

   - Initialisation (100) au moyen d'un actionnement randomisé (101) d'effecteurs et lecture (102) d'une pluralité d'unités de capteurs internes agencées pour mesurer des propriétés internes du dispositif en tant qu'états internes et une lecture (103) de propriétés externes de l'environnement en tant qu'états externes par une pluralité d'unités de capteurs externes agencées pour la mesure,
   - un objet étant détecté à l'aide des unités de capteurs externes et ses paramètres détectés étant comparés aux propriétés du dispositif et aux instructions d'action des dispositifs et les paramètres détectés étant utilisés pour prédire un comportement de l'objet détecté,
   - dans lequel une instruction d'action, en tant que fonction de cartographie, convertit un triplet de sortie de l'actionnement des effecteurs, des propriétés du dispositif et des propriétés de l'environnement en un triplet cible qui spécifie un nouvel état interne, un nouvel état externe et des actions possibles qui sont possibles dans les nouveaux états,
   - mémoriser (104), en tant qu'instructions d'action, les interactions qui existent entre l'actionnement (101) des effecteurs et les propriétés du dispositif et les propriétés de l'environnement lues ; et
   - commander (105) le dispositif selon au moins une propriété de dispositif cible prédéfinie et/ou au moins une propriété d'environnement cible prédéfinie en utilisant au moins une instruction d'action mémorisée (104), qui indique comment régler l'au moins une propriété de dispositif de visée prédéfinie et/ou l'au moins une propriété d'environnement de visée prédéfinie à l'aide du triplet de sortie et du triplet de destination, le procédé étant itéré de manière à apprendre en reconnaissant toujours de nouvelles instructions d'action qui transforment respectivement un triplet de sortie en un triplet de destination et ces instructions d'action étant mémorisées pour commander le dispositif.

2. Procédé selon la revendication 1, **caractérisé en ce que** le procédé est itéré de manière à apprendre, de telle sorte que de nouvelles instructions d'action sont toujours reconnues, qui transforment respectivement un triplet de sortie en un triplet cible et que ces instructions d'action sont mémorisées pour commander (105) le dispositif.

3. Procédé selon la revendication 1 ou 2, **caractérisé en ce que** la lecture (102, 103) d'effecteurs internes et/ou externes s'effectue de telle sorte que des valeurs de base individuelles sont mémorisées et des valeurs intermédiaires sont interpolées et/ou extrapolées.

4. Procédé selon l'une des revendications précédentes, **caractérisé en ce que** la caractéristique du dispositif cible et/ou la caractéristique de l'environnement cible est influencée au moins temporairement par une caractéristique du dispositif et/ou une caractéristique de l'environnement.

5. Procédé selon l'une des revendications précédentes, **caractérisé en ce que** plusieurs instructions d'action sont combinées en une chorégraphie qui transforme un triplet de départ en un triplet d'arrivée.

6. Procédé selon l'une des revendications précédentes, **caractérisé en ce qu'**un objet est détecté à l'aide d'unités de capteurs externes et que ses paramètres détectés sont comparés aux propriétés du dispositif et/ou aux instructions d'action des dispositifs.

7. Procédé selon la revendication 6, **caractérisé en ce que** les paramètres détectés sont utilisés pour prédire un comportement de l'objet détecté.

8. Procédé selon l'une des revendications 6 ou 7, **caractérisé en ce que** des interactions de l'objet détecté entre ses paramètres et ses actions sont utilisées pour établir des instructions d'action du dispositif.

9. Procédé selon l'une quelconque des revendications précédentes, **caractérisé en ce qu'**un effecteur est présent sous la forme d'un moteur, d'un bras de préhension, d'une unité de déplacement, d'une propulsion, d'un essuie-glace, d'un clignotant, d'un feu, d'une direction ou d'une unité d'exécution.

10. Procédé selon l'une quelconque des revendications précédentes, **caractérisé en ce que** des unités de capteurs internes détectent un état d'effecteur, un réglage d'effecteur, une position d'effecteur, une taille, un poids, une dimension, une vitesse, une accélération, une décélération, un niveau de batterie, une position, et/ou un autre paramètre système du dispositif.

11. Procédé selon l'une des revendications précédentes, **caractérisé en ce que** des unités de capteurs externes détectent une distance, un objet, un signal lidar, un signal d'image, une position, une taille, une dimension, un signal de batterie et/ou un autre paramètre externe.

12. Dispositif agencé pour mettre en œuvre un procédé selon l'une des revendications précédentes, comprenant :

- une unité d'initialisation agencée pour initialiser (100) au moyen d'un actionnement randomisé (101) d'effecteurs et d'une lecture (102) d'une pluralité d'unités de capteurs internes agencées pour mesurer des caractéristiques internes du dispositif en tant qu'états internes et d'une lecture (103) de caractéristiques d'environnement externes en tant qu'états externes par une pluralité d'unités de capteurs externes agencées pour la mesure,
- le dispositif étant conçu pour détecter un objet à l'aide des unités de capteurs externes et pour comparer ses paramètres détectés avec des propriétés de dispositif et des instructions d'action des dispositifs et pour utiliser les paramètres détectés pour prédire un comportement de l'objet détecté,
- une instruction d'action, en tant que fonction de cartographie, convertit un triplet de sortie de l'actionnement des effecteurs, des propriétés du dispositif et des propriétés de l'environnement en un triplet cible qui spécifie un nouvel état interne, un nouvel état externe ainsi que des actions possibles qui sont possibles dans les nouveaux états,
- une unité de mémoire agencée pour mémoriser (104), en tant qu'instructions d'action, des interactions qui existent entre l'actionnement (101) des effecteurs et les propriétés du dispositif et les propriétés de l'environnement lues,
- le dispositif étant en outre conçu pour être commandé selon au moins une propriété de dispositif cible prédéfinie et/ou au moins une propriété d'environnement cible prédéfinie en utilisant au moins une instruction d'action mémorisée qui indique comment la au moins une propriété de dispositif cible prédéfinie et/ou la au moins une propriété d'environnement cible prédéfinie est réglée à l'aide de la barrette de sortie et de la barrette cible, et
- le dispositif étant en outre conçu pour que le procédé soit itéré de manière à apprendre, en reconnaissant toujours de nouvelles instructions d'action qui transforment respectivement un triplet de sortie en un triplet de destination et en mémorisant ces instructions d'action pour commander le dispositif.

Fig.: 1

Fig.: 2

Fig.: 3

Fig.: 4

Fig.: 5

200 [ ]
201 [ ]
202 [ ]
203 [ ]
204 [ ]
205 [ ]

Fig.: 6A

310

311

312

313

314

315

Fig.: 6B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **TAKAHASHI KUNIYUKL et al.** Dynamic motion learning for multi-DOF flexible-joint robots using active-passive motor babbling through deep learning. *ADVANCED ROBOTICS*, 17 September 2017, vol. 31 (18), 1002-1015